# EUROPEAN PATENT APPLICATION

(11) **EP 4 340 263 A1**
(43) Date of publication of application: **20.03.2024**
(21) Application number: 22810285.1
(22) Date of filing: 25.04.2022
(51) Int. Cl.: H04L 1/00

(54) **METHOD AND DEVICE FOR ALIGNING DOWNLINK CONTROL INFORMATION SIZE**

(30) Priority: 24.05.2021 CN 202110566604
(71) Applicant: Huawei Technologies Co., Ltd., Longgang Shenzhen, Guangdong 518129 (CN)
(72) Inventor: WANG, Feng, Shenzhen, Guangdong 518129 (CN); ZHANG, Xu, Shenzhen, Guangdong 518129 (CN); QU, Bingyu, Shenzhen, Guangdong 518129 (CN); GUAN, Lei, Shenzhen, Guangdong 518129 (CN); HU, Dan, Shenzhen, Guangdong 518129 (CN)
(74) Representative: Huawei European IPR
(86) International application number: PCT/CN2022/088997
(87) International publication number: WO 2022/247552

(57) **Abstract**

This application provides a downlink control information alignment method and an apparatus. The method includes: A terminal device determines a payload size of a first DCI format, where the first DCI format is for scheduling an uplink carrier, and carries a first carrier indication. In addition, the payload size of the first DCI format is the same as a payload size of a second DCI format; and the second DCI format is for scheduling a downlink carrier, and carries a second carrier indication. The first carrier indication is different from the second carrier indication. The method further includes: The terminal device monitors DCI in the first DCI format. The terminal device determines the payload size of the first DCI format, and monitors the DCI based on the payload size, so that a quantity of payload sizes of different DCI formats that need to be monitored by the terminal device can be reduced, and complexity and resource overheads of monitoring the DCI by the terminal device can be reduced.

## Description

This application claims priority to Chinese Patent Application No. 202110566604.2, filed with the China National Intellectual Property Administration on May 24, 2021 and entitled "DOWNLINK CONTROL INFORMATION SIZE ALIGNMENT METHOD AND APPARATUS", which is incorporated herein by reference in its entirety.

### TECHNICAL FIELD

This application relates to the wireless communication field, and more specifically, to a downlink control information alignment method and an apparatus.

### BACKGROUND

As a quantity of smart-terminal users constantly increases, a user equipment (user equipment, UE) service volume and a data throughput constantly increase, and a higher requirement is posed on a communication rate. To satisfy a requirement for higher downlink and uplink peak rates, a larger transmission bandwidth needs to be provided. Therefore, a plurality of component carriers (Component Carriers, CCs) may be aggregated in a carrier aggregation (Carrier Aggregation, CA) manner, to support the larger transmission bandwidth.

In the carrier aggregation manner, there may simultaneously be a plurality of downlink control information (downlink control information, DCI) formats whose payload sizes are different. As a result, a quantity of payload sizes of the different DCI formats that need to be simultaneously monitored by UE is large, which causes high overheads and a resource waste.

### SUMMARY

This application provides a downlink control information DCI size alignment method and an apparatus, to reduce complexity and resource overheads of monitoring payload sizes of different DCI formats by UE.

According to a first aspect, a downlink control information DCI size alignment method is provided. The method includes: determining a payload size of a first DCI format, where the payload size of the first DCI format is the same as a payload size of a second DCI format; the first DCI format is for scheduling an uplink carrier, and carries a first carrier indication; the second DCI format is for scheduling a downlink carrier, and carries a second carrier indication; and the first carrier indication is different from the second carrier indication; and monitoring DCI in the first DCI format.

In the downlink control information alignment method provided in this application, a terminal device determines the payload size of the first DCI format, and monitors the DCI based on the payload size, so that a quantity of payload sizes of different DCI formats that need to be monitored by the terminal device can be reduced, and complexity and resource overheads of monitoring the DCI by the terminal device can be reduced.

With reference to the first aspect, in some implementations of the first aspect, the determining a payload size of a first DCI format includes: determining that the payload size of the first DCI format is an information bit quantity of a DCI format whose information bit quantity is largest in a plurality of DCI formats that need to be monitored by a terminal device.

With reference to the first aspect, in some implementations of the first aspect, the plurality of DCI formats further include a third DCI format; the third DCI format is for scheduling an uplink carrier, and carries the second carrier indication or a third carrier indication; and the third carrier indication is different from both the first carrier indication and the second carrier indication.

With reference to the first aspect, in some implementations of the first aspect, the plurality of DCI formats further include a fourth DCI format, where the fourth DCI format is for scheduling a downlink carrier, and carries the first carrier indication; and an information bit quantity of the fourth DCI format is configured to be the same as an information bit quantity of the second DCI format; or the fourth DCI format is for scheduling an uplink carrier, and carries the second carrier indication; and an information bit quantity of the fourth DCI format is configured to be the same as an information bit quantity of the first DCI format.

With reference to the first aspect, in some implementations of the first aspect, the first carrier indication indicates a carrier in a secondary cell, and the second carrier indication indicates a carrier in a primary cell; and the determining a payload size of a first DCI format includes: determining that the payload size of the first DCI format is an information bit quantity of the second DCI format.

With reference to the first aspect, in some implementations of the first aspect, the first carrier indication indicates a carrier in a secondary cell, and the second carrier indication indicates a carrier in a primary cell or a secondary cell; and the determining a payload size of a first DCI format includes: determining that the payload size of the first DCI format is an information bit quantity of a fifth DCI format, where the fifth DCI format is for scheduling a downlink carrier, and carries the first carrier indication; and the information bit quantity of the fifth DCI format is configured to be the same as an information bit quantity of the second DCI format.

With reference to the first aspect, in some implementations of the first aspect, the monitoring DCI in the first DCI format includes: monitoring the DCI in the first DCI format in a first search space, where the first search space is a search space corresponding to the carrier indication carried in the second DCI format, or the first search space is a subset of a search space corresponding to the carrier indication carried in the first DCI format.

In the downlink control information alignment method provided in this application, the terminal device determines the payload size of the first DCI format in different manners, and monitors the DCI based on the payload size, so that in a plurality of scenarios, the quantity of payload sizes of the different DCI formats that need to be monitored by the terminal device can be reduced, and the complexity and the resource overheads of monitoring the DCI by the terminal device can be reduced.

According to a second aspect, a downlink control information DCI size alignment method is provided. The method includes: determining a payload size of a first DCI format, to enable the payload size of the first DCI format to be the same as a payload size of a second DCI format, where the first DCI format is for scheduling an uplink carrier, and carries a first carrier indication; the second DCI format is for scheduling a downlink carrier, and carries a second carrier indication; and the first carrier indication is different from the second carrier indication; and sending DCI in a plurality of DCI formats.

With reference to the second aspect, in some implementations of the second aspect, the method further includes: configuring an information bit quantity of the first DCI format and an information bit quantity of the second DCI format; and the determining a payload size of a first DCI format includes: when the information bit quantity of the first DCI format is less than the information bit quantity of the second DCI format, padding the first DCI format, to enable the payload size of the first DCI format to be the information bit quantity of the second DCI format.

With reference to the second aspect, in some implementations of the second aspect, the determining a payload size of a first DCI format includes: determining that the payload size of the first DCI format is an information bit quantity of a DCI format whose information bit quantity is largest in the plurality of DCI formats that need to be monitored by a terminal device.

With reference to the second aspect, in some implementations of the second aspect, the plurality of DCI formats further include a third DCI format; the third DCI format is for scheduling an uplink carrier, and carries the second carrier indication or a third carrier indication; and the third carrier indication is different from both the first carrier indication and the second carrier indication.

With reference to the second aspect, in some implementations of the second aspect, the plurality of DCI formats further include a fourth DCI format, where the fourth DCI format is for scheduling a downlink carrier, and carries the first carrier indication; and an information bit quantity of the fourth DCI format is configured to be the same as an information bit quantity of the second DCI format; or the fourth DCI format is for scheduling an uplink carrier, and carries the second carrier indication; and an information bit quantity of the fourth DCI format is configured to be the same as an information bit quantity of the first DCI format.

With reference to the second aspect, in some implementations of the second aspect, the method further includes: when the first carrier indication indicates a carrier in a secondary cell, and the second carrier indication indicates a carrier in a primary cell, padding or truncating the first DCI format, to enable the payload size of the first DCI format to be the information bit quantity of the second DCI format.

With reference to the second aspect, in some implementations of the second aspect, the first carrier indication indicates a carrier in a secondary cell, and the second carrier indication indicates a carrier in a primary cell or a secondary cell; and the method further includes: configuring an information bit quantity of a fifth DCI format, where the fifth DCI format is for scheduling a downlink carrier, and carries the first carrier indication; and the information bit quantity of the fifth DCI format is the same as the information bit quantity of the second DCI format; and padding or truncating the first DCI format, to enable the payload size of the first DCI format to be the information bit quantity of the fifth DCI format.

In the downlink control information alignment method provided in this embodiment of this application, a network device aligns payload sizes of the plurality of DCI formats in different scenarios in a plurality of manners, so that when monitoring the DCI, the terminal device can monitor DCI in the first DCI format based on the determined payload size of the first DCI format, to reduce a quantity of payload sizes of different DCI formats that need to be monitored by the terminal device, and reduce complexity of monitoring the DCI by the terminal device.

According to a third aspect, a downlink control information DCI size alignment apparatus is provided. The apparatus includes: a processing unit, where the processing unit is configured to determine a payload size of a first DCI format, where the payload size of the first DCI format is the same as a payload size of a second DCI format; the first DCI format is for scheduling an uplink carrier, and carries a first carrier indication; the second DCI format is for scheduling a downlink carrier, and carries a second carrier indication; and the first carrier indication is different from the second carrier indication; and a transceiver unit, where the transceiver unit is configured to monitor DCI in the first DCI format. The apparatus may be a terminal device, or may be a chip in the terminal device. The processing unit may be a processor. When the apparatus is the terminal device, the transceiver unit may be a transceiver. When the apparatus is the chip in the terminal device, the transceiver unit may be a communication interface.

With reference to the third aspect, in some implementations of the third aspect, the processing unit is specifically configured to determine that the payload size of the first DCI format is an information bit quantity of a DCI format whose information bit quantity is largest in a plurality of DCI formats that need to be monitored by a terminal device.

With reference to the third aspect, in some implementations of the third aspect, the plurality of DCI formats further include a third DCI format; the third DCI format is for scheduling an uplink carrier, and carries the second carrier indication or a third carrier indication; and the third carrier indication is different from both the first carrier indication and the second carrier indication.

With reference to the third aspect, in some implementations of the third aspect, the plurality of DCI formats further include a fourth DCI format, where the fourth DCI format is for scheduling a downlink carrier, and carries the first carrier indication; and an information bit quantity of the fourth DCI format is configured to be the same as an information bit quantity of the second DCI format; or the fourth DCI format is for scheduling an uplink carrier, and carries the second carrier indication; and an information bit quantity of the fourth DCI format is configured to be the same as an information bit quantity of the first DCI format.

With reference to the third aspect, in some implementations of the third aspect, the first carrier indication indicates a carrier in a secondary cell, and the second carrier indication indicates a carrier in a primary cell; and the processing unit is specifically configured to determine that the payload size of the first DCI format is an information bit quantity of the second DCI format.

With reference to the third aspect, in some implementations of the third aspect, the first carrier indication indicates a carrier in a secondary cell, and the second carrier indication indicates a carrier in a primary cell or a secondary cell; and the processing unit is specifically configured to determine that the payload size of the first DCI format is an information bit quantity of a fifth DCI format, where the fifth DCI format is for scheduling a downlink carrier, and carries the first carrier indication; and the information bit quantity of the fifth DCI format is configured to be the same as an information bit quantity of the second DCI format.

With reference to the third aspect, in some implementations of the third aspect, the transceiver unit is specifically configured to monitor the DCI in the first DCI format in a first search space, where the first search space is a search space corresponding to the carrier indication carried in the second DCI format, or the first search space is a subset of a search space corresponding to the carrier indication carried in the first DCI format.

According to a fourth aspect, a downlink control information DCI size alignment apparatus is provided, and includes: a processing unit, where the processing unit is configured to determine a payload size of a first DCI format, to enable the payload size of the first DCI format to be the same as a payload size of a second DCI format, where the first DCI format is for scheduling an uplink carrier, and carries a first carrier indication; the second DCI format is for scheduling a downlink carrier, and carries a second carrier indication; and the first carrier indication is different from the second carrier indication; and a transceiver unit, where the transceiver unit is configured to send DCI in a plurality of DCI formats. The apparatus may be a network device or a chip in the network device. The processing unit may be a processor. When the apparatus is the network device, the transceiver unit may be a transceiver. When the apparatus is the chip in the network device, the transceiver unit may be a communication interface.

With reference to the fourth aspect, in some implementations of the fourth aspect, the processing unit is further configured to configure an information bit quantity of the first DCI format and an information bit quantity of the second DCI format; and when the information bit quantity of the first DCI format is less than the information bit quantity of the second DCI format, the processing unit is specifically configured to pad the first DCI format, to enable the payload size of the first DCI format to be the information bit quantity of the second DCI format.

With reference to the fourth aspect, in some implementations of the fourth aspect, the processing unit is specifically configured to determine that the payload size of the first DCI format is an information bit quantity of a DCI format whose information bit quantity is largest in the plurality of DCI formats that need to be monitored by a terminal device.

With reference to the fourth aspect, in some implementations of the fourth aspect, the plurality of DCI formats further include a third DCI format; the third DCI format is for scheduling an uplink carrier, and carries the second carrier indication or a third carrier indication; and the third carrier indication is different from both the first carrier indication and the second carrier indication.

With reference to the fourth aspect, in some implementations of the fourth aspect, the plurality of DCI formats further include a fourth DCI format, where the fourth DCI format is for scheduling a downlink carrier, and carries the first carrier indication; and an information bit quantity of the fourth DCI format is configured to be the same as an information bit quantity of the second DCI format; or the fourth DCI format is for scheduling an uplink carrier, and carries the second carrier indication; and an information bit quantity of the fourth DCI format is configured to be the same as an information bit quantity of the first DCI format.

With reference to the fourth aspect, in some implementations of the fourth aspect, when the first carrier indication indicates a carrier in a secondary cell, and the second carrier indication indicates a carrier in a primary cell, the processing unit is specifically configured to pad or truncate the first DCI format, to enable the payload size of the first DCI format to be the information bit quantity of the second DCI format.

With reference to the fourth aspect, in some implementations of the fourth aspect, the first carrier indication indicates a carrier in a secondary cell, and the second carrier indication indicates a carrier in a primary cell or a secondary cell; the processing unit is specifically configured to configure an information bit quantity of a fifth DCI format, where the fifth DCI format is for scheduling a downlink carrier, and carries the first carrier indication; and the information bit quantity of the fifth DCI format is the same as the information bit quantity of the second DCI format; and the processing unit is further configured to pad or truncate the first DCI format, to enable the payload size of the first DCI format to be the information bit quantity of the fifth DCI format.

According to a fifth aspect, a communication apparatus is provided. The communication apparatus includes a processor and a storage medium, and the storage medium stores instructions. When the instructions are run by the processor, the communication apparatus is enabled to perform the method according to any one of the first aspect and the second aspect. The communication apparatus may be a chip in a terminal device or a network device.

According to a sixth aspect, a computer-readable storage medium is provided. The computer-readable storage medium stores a computer program. When the computer program is run, a communication apparatus is enabled to perform the method according to any one of the first aspect and the second aspect.

According to a seventh aspect, a computer program product is provided. The computer program product includes a computer program. When the computer program is run by a computer, the computer is enabled to perform the method according to any one of the first aspect and the second aspect.

According to an eighth aspect, a communication system is provided, and includes the communication apparatus according to any one of the third aspect and the fourth aspect.

### BRIEF DESCRIPTION OF DRAWINGS

FIG. 1 is a schematic diagram of a communication system used in an embodiment of this application;
FIG. 2 is a schematic diagram of another communication system used in an embodiment of this application;
FIG. 3 is a schematic block diagram of a downlink control information size alignment method according to an embodiment of this application;
FIG. 4 is a schematic diagram of a downlink control information size alignment scenario according to an embodiment of this application;
FIG. 5 is a schematic diagram of another downlink control information size alignment scenario according to an embodiment of this application;
FIG. 6 is a schematic diagram of another downlink control information size alignment scenario according to an embodiment of this application;
FIG. 7 is a schematic diagram of a downlink control information size alignment apparatus according to an embodiment of this application;
FIG. 8 is a schematic diagram of another downlink control information size alignment apparatus according to an embodiment of this application;
FIG. 9 is a schematic diagram of a structure of a terminal device according to an embodiment of this application; and
FIG. 10 is a schematic diagram of a structure of a network device according to an embodiment of this application.

### DESCRIPTION OF EMBODIMENTS

The following describes technical solutions in this application with reference to accompanying drawings.

The technical solutions in embodiments of this application may be applied to various communication systems such as a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a future 5th generation (5th generation, 5G) system, or a new radio (new radio, NR) system. The 5G mobile communication system in this application includes a non-standalone (non-standalone, NSA) 5G mobile communication system or a standalone (standalone, SA) 5G mobile communication system. The technical solutions provided in this application may further be applied to a future communication system such as a sixth generation mobile communication system. The communication system may alternatively be a public land mobile network (Public Land Mobile Network, PLMN) network, a device-to-device (device-to-device, D2D) communication system, a machine-to-machine (machine-to-machine, M2M) communication system, an internet of things (Internet of Things, IoT) communication system, or another communication system.

A terminal device (user equipment, UE) in embodiments of this application may be an access terminal, a subscriber unit, a subscriber station, a mobile station, a relay station, a remote station, a remote terminal, a mobile device, a user terminal (user terminal), terminal equipment (terminal equipment), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), a terminal device in a future internet of vehicles, or the like. This is not limited in embodiments of this application.

By way of example but not limitation, in embodiments of this application, the wearable device may also be referred to as a wearable intelligent device, and is a generic term for wearable devices such as glasses, gloves, watches, clothes, and shoes that are developed based on intelligent design of daily wearing by using wearable technologies. The wearable device is a portable device that is directly worn or integrated into clothes or an accessory of a user. The wearable device not only is a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that focus on only one type of application function and need to work with other devices such as smartphones, such as various smart bands or smart jewelry for monitoring physical signs.

In addition, the terminal device in embodiments of this application may alternatively be a terminal device in the IoT system. An IoT is an important component of future information technology development. A main technical feature of the IoT is connecting a thing to a network by using a communication technology, to implement an intelligent network for interconnection between a person and a machine or between things. In embodiments of this application, an IoT technology may implement massive connections, deep coverage, and terminal power saving by using, for example, a narrowband (narrowband, NB) technology.

In addition, in embodiments of this application, the terminal device may further include a sensor such as an intelligent printer, a train detector, or a gas station, and main functions include collecting data (some terminal devices), receiving control information and downlink data of a network device, sending electromagnetic wave, and transmitting uplink data to the network device.

The network device in embodiments of this application may be any communication device that has a wireless transceiver function and that is configured to communicate with the terminal device. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, HeNB, or a home NodeB, HNB), a base band unit (base band unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. The device may alternatively be a gNB or a transmission point (TRP or TP) in a 5G system such as an NR system, or one antenna panel or a group of antenna panels (including a plurality of antenna panels) of a base station in the 5G system, or may be a network node, for example, a base band unit (BBU) or a distributed unit (distributed unit, DU), that constitutes a gNB or a transmission point.

In some deployment, the gNB may include a central unit (central unit, CU) and the DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified as a network device in an access network (radio access network, RAN), or the CU may be classified as a network device in a core network (core network, CN). This is not limited in this application.

In embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (which is also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a function module that can invoke and execute the program and that is in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable storage media" may include but is not limited to a wireless channel, and various other media that can store, include, and/or carry instructions and/or data. The following describes embodiments of this application in detail with reference to the accompanying drawings. It should be understood that, in the following embodiments, terms such as "first" and "second" are merely intended to distinguish between different objects, and should not constitute any limitation on this application.

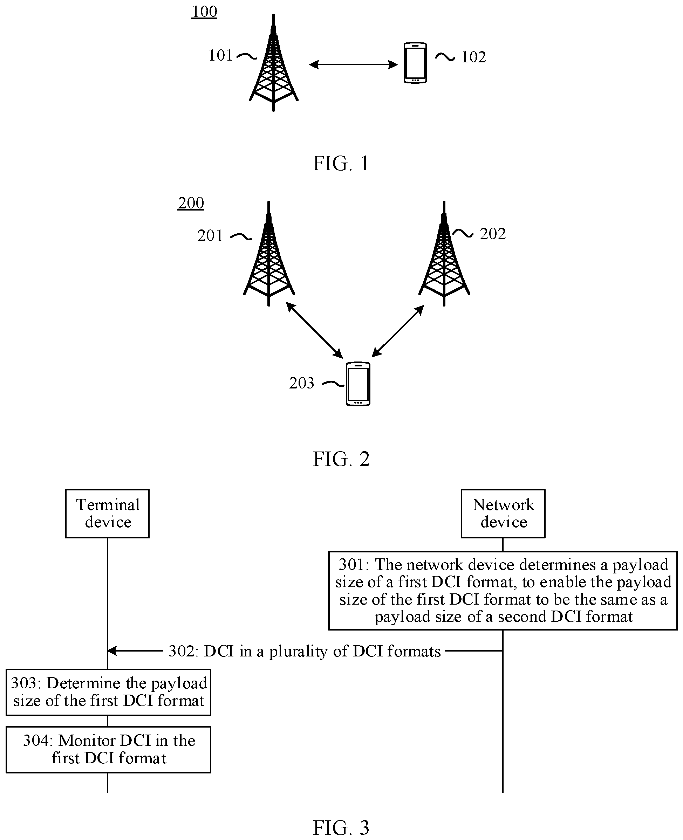

FIG. 1 is a schematic diagram of a communication system used in an embodiment of this application. As shown in FIG. 1, the communication system 100 may include at least one network device such as a network device 101 shown in FIG. 1. The communication system 100 may further include at least one terminal device such as a terminal device 102 shown in FIG. 1. The network device 101 and the terminal device 102 may communicate with each other through a radio link.

FIG. 2 is a schematic diagram of another communication system used in an embodiment of this application. As shown in FIG. 2, the communication system 200 may include at least two network devices such as network devices 201 and 202 shown in FIG. 2. The communication system 200 may further include at least one terminal device such as a terminal device 203 shown in FIG. 2. The terminal device 203 may establish radio links to the network device 201 and the network device 202 by using a dual connectivity (dual connectivity, DC) technology or a multi-connectivity technology. The network device 201 may be, for example, a primary base station, and the network device 202 may be, for example, a secondary base station. In this case, the network device 201 is a network device used when the terminal device 203 performs initial access, and is responsible for radio resource control (radio resource control, RRC) communication with the terminal device 203. The network device 202 may be added during RRC reconfiguration, and is configured to provide an additional radio resource.

Certainly, the network device 202 may alternatively be a primary base station, and the network device 201 may alternatively be a secondary base station. This is not limited in this application. In addition, for ease of understanding only, the figure shows a case in which the two network devices are wirelessly connected to the terminal device. However, this should not constitute any limitation on a scenario to which this application is applicable. The terminal device may further establish radio links to more network devices.

A plurality of antennas may be configured for each communication device such as the network device 101 or the terminal device 102 in FIG. 1 or the network device 201, the network device 202, or the terminal device 203 in FIG. 2. The plurality of antennas may include at least one transmit antenna configured to send a signal and at least one receive antenna configured to receive a signal. In addition, the communication device further additionally includes a transmitter chain and a receiver chain. A person of ordinary skill in the art may understand that the transmitter chain and the receiver chain each may include a plurality of components (for example, a processor, a modulator, a multiplexer, a demodulator, a demultiplexer, or an antenna) related to signal sending and receiving. Therefore, the network device and the terminal device may communicate with each other by using a multi-antenna technology.

In a current solution to alignment of payload sizes of DCI formats, a payload size of a DCI format for scheduling an uplink carrier is usually aligned with a payload size of a DCI format for scheduling a downlink carrier in a same cell. If a supplementary uplink (supplementary uplink, SUL) carrier is configured in a cell, a payload size of a DCI format for scheduling the supplementary uplink carrier is aligned with a payload size of a DCI format for scheduling a normal uplink (normal uplink, NUL) carrier in the same cell.

In a carrier aggregation scenario, a plurality of uplink carriers may be configured for the terminal device. For example, a plurality of supplementary uplink carriers are configured in a same cell, or a plurality of secondary cells are configured for the terminal device, where only an uplink carrier is configured in a part of the secondary cells. In other words, in the same cell, a part of the uplink carriers configured by the network device for the terminal device may have no corresponding downlink carrier, no downlink carrier that belongs to a same frequency band, no downlink carrier having a same frequency reference point, or no downlink carrier indicated by a same carrier indication. In these cases, a quantity of payload sizes of DCI formats that need to be monitored by the terminal device cannot be reduced according to a current method for aligning the payload sizes of the DCI formats.

Therefore, embodiments of this application provide a downlink control information size alignment method and an apparatus, so that in the foregoing scenario, a quantity of payload sizes of different DCI formats that need to be monitored by the terminal device can be reduced, and complexity and resource overheads of monitoring DCI by the terminal device can be reduced.

In addition, to facilitate understanding of embodiments of this application, the following several descriptions are provided.

First, in this application, "indicating" may include "directly indicating" and "indirectly indicating". When a piece of indication information is described as indicating A, the indication information may directly indicate A or indirectly indicate A, but it does not necessarily indicate that the indication information carries A.

Information indicated by the indication information is referred to as to-be-indicated information. In a specific implementation process, the to-be-indicated information is indicated in a plurality of manners, for example, including but not limited to, the following manners: The to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all information may further be identified and indicated together, to reduce indication overheads caused by separately indicating the same information. In addition, a specific indication manner may alternatively be various existing indication manners, for example, including but not limited to, the foregoing indication manners and various combinations thereof. For details of various indication manners, refer to the conventional technology. Details are not described in this specification. It can be learned from the foregoing descriptions that, for example, when a plurality of pieces of information of a same type need to be indicated, manners of indicating different information may be different. In a specific implementation process, a needed indication manner may be selected based on a specific requirement. The selected indication manner is not limited in embodiments of this application. In this way, the indication manners in embodiments of this application should be understood as covering various methods that enable a to-be-indicated party to learn of the to-be-indicated information.

The to-be-indicated information may be sent as a whole, or may be divided into a plurality of pieces of sub-information for separately sending, and sending periodicities and/or sending occasions of these pieces of sub-information may be the same or different. A specific sending method is not limited in this application. The sending periodicities and/or the sending occasions of these pieces of sub-information may be predefined, for example, predefined according to a protocol, or may be configured by a transmitting end device by sending configuration information to a receiving end device. The configuration information may include, for example, but not limited to, one or a combination of at least two of radio resource control signaling, media access control (media access control, MAC) layer signaling, and physical layer signaling. The radio resource control signaling is, for example, RRC layer signaling; the MAC layer signaling includes, for example, a MAC control element (control element, CE); and the physical layer signaling is, for example, DCI.

Second, in the following embodiments, "first", "second", and various numerical numbers are intended to distinguish between similar objects, but do not necessarily indicate a specific order or sequence. It should be understood that the data termed in such a way are interchangeable in proper circumstances so that embodiments of this application described herein can be implemented in an order other than the orders illustrated or described herein. This is not intended to limit the scope of embodiments of this application. For example, the terms are for distinguishing between different preset correspondences.

Third, in the following embodiments, "preset" may include being indicated by the network device by using signaling or being predefined, for example, defined in a protocol. "Being predefined" may be implemented by prestoring corresponding code or a corresponding table in a device (for example, including the terminal device and the network device) or in another manner that may indicate related information. A specific implementation of "being predefined" is not limited in this application.

Fourth, "being stored" in embodiments of this application may be storage in one or more memories. The one or more memories may be separately disposed, or may be integrated into an encoder, a decoder, a processor, or a communication apparatus. Alternatively, a part of the one or more memories may be separately disposed, and a part of the one or more memories are integrated into a decoder, a processor, or a communication apparatus. A type of the memory may be a storage medium in any form. This is not limited in this application.

Fifth, a "protocol" in embodiments of this application may be a standard protocol in the communication field, for example, may include an LTE protocol, an NR protocol, and a related protocol applied to a future communication system. This is not limited in this application.

Sixth, descriptions related to transmission of downlink control information in embodiments of this application, unless otherwise specified, mean receiving the downlink control information from a perspective of the terminal device and sending the downlink control information from a perspective of the network device.

Seventh, scheduling downlink transmission in implementations of this application means that the network device schedules downlink data for the terminal device. Accordingly, the network device sends the downlink data according to a scheduling command, and the terminal device receives the scheduled downlink data. Scheduling uplink transmission in implementations of this application means that the network device schedules uplink data for the terminal device. Accordingly, the terminal device sends the uplink data according to a scheduling command, and the network device receives the scheduled uplink data.

With reference to FIG. 1 and FIG. 2, the foregoing briefly describes the scenarios to which embodiments of this application can be applied. With reference to the accompanying drawings, the following describes in detail the downlink control information alignment method provided in embodiments of this application. Processing performed by a single execution body shown in embodiments of this application may also be divided into processing processed by a plurality of execution bodies, and these execution bodies may be logically and/or physically separated. For example, processing performed by the network device may be divided into processing performed by at least one of a central unit (central unit, CU), a distributed unit (distributed unit, DU), and a radio unit (radio unit, RU).

FIG. 3 is a schematic block diagram of a downlink control information size alignment method according to an embodiment of this application.

301: A network device determines a payload size (payload size) of a first DCI format, to enable the payload size of the first DCI format to be the same as a payload size of a second DCI format.

The first DCI format is for scheduling an uplink carrier, and carries a first carrier indication; the second DCI format is for scheduling a downlink carrier, and carries a second carrier indication; and the first carrier indication is different from the second carrier indication. In other words, the uplink carrier scheduled by using the first DCI format and the downlink carrier scheduled by using the second DCI format are not an uplink carrier and a downlink carrier that are indicated by a same carrier indication.

In this embodiment of this application, a payload size of a DCI format may be referred to as a DCI size (size). Specifically, the payload size of the DCI format is understood as a bit quantity of DCI, and the bit quantity of the DCI is a bit quantity of entire DCI that needs to be blindly detected on a terminal device side. It should be understood that, if a truncation operation is performed on the DCI, the bit quantity of the DCI is equal to an information bit quantity of the DCI minus a quantity of bits that need to be truncated; or if a padding operation is performed on the DCI, the bit quantity of the DCI is equal to an information bit quantity of the DCI plus a quantity of padded bits.

Before determining the payload size of the first DCI format, the network device may first configure an information bit quantity of the first DCI format and an information bit quantity of the second DCI format, and pad or truncate the first DCI format and/or the second DCI format under a condition based on the information bit quantities, to obtain the payload size of the first DCI format and/or the payload size of the second DCI format. For example, if the network device determines the payload size of the first DCI format or the payload size of the second DCI format as a larger one of the information bit quantities of the first DCI format and the second DCI format, when the information bit quantity of the first DCI format is less than the information bit quantity of the second DCI format, the network device pads the first DCI format, for example, with 0, so that the payload size of the first DCI format is the information bit quantity of the second DCI format; or when the information bit quantity of the first DCI format is greater than the information bit quantity of the second DCI format, the network device pads the second DCI format, for example, with 0, so that the payload size of the second DCI format is the information bit quantity of the first DCI format. If the network device specifies that the information bit quantity of the first DCI format is an aligned payload size of a DCI format, and the information bit quantity of the second DCI format is greater than the information bit quantity of the first DCI format, the network device truncates the second DCI format, for example, truncates first several most significant bits in a frequency domain resource allocation field of the second DCI format, so that the payload size of the second DCI format is the information bit quantity of the first DCI format. If the network device specifies that the information bit quantity of the second DCI format is an aligned payload size of a DCI format, and the information bit quantity of the second DCI format is less than the information bit quantity of the first DCI format, the network device truncates the first DCI format, for example, truncates first several most significant bits in a frequency domain resource allocation field of the first DCI format, so that the payload size of the first DCI format is the information bit quantity of the second DCI format. The foregoing conditions for padding or truncating the first DCI format and/or the second DCI format are merely examples, and constitute no limitation. In other words, the network device may pad or truncate another DCI format based on information bit quantities by using a payload size as a reference, so that payload sizes of different DCI formats are the same. That is, the payload size of the first DCI format and the payload size of the second DCI format keep same.

When the first carrier indication carried in the first DCI format indicates a carrier in a secondary cell, and the second carrier indication carried in the second DCI format indicates a carrier in a primary cell, the network device may pad or truncate the first DCI format, to enable the payload size of the first DCI format to be the information bit quantity of the second DCI format. In other words, when the uplink carrier scheduled by using the first DCI format is an uplink carrier in the secondary cell, and the downlink carrier scheduled by using the second DCI format is a downlink carrier in the primary cell, the network device may enable the payload size of the first DCI format and the payload size of the second DCI format to keep same, and keep the payload size of the second DCI format unchanged.

Optionally, the payload size that is of the first DCI format and that is determined by the network device may be an information bit quantity of a DCI format whose information bit quantity is largest in a plurality of DCI formats that need to be monitored by a terminal device. It should be understood that the network device configures the plurality of DCI formats for the terminal device, may use the information bit quantity of the DCI format whose information bit quantity is largest in the plurality of DCI formats as the payload size of the first DCI format, and enables payload sizes of other DCI formats to be the same as the payload size of the first DCI format. Because the payload size of the first DCI format is the information bit quantity of the DCI format whose information bit quantity is largest in the plurality of DCI formats, when the payload sizes of the other DCI formats are aligned with the payload size of the first DCI format, the payload sizes of the DCI formats may be enabled to be the same as the payload size of the first DCI format by padding the other DCI formats. The plurality of DCI formats may include a third DCI format. The third DCI format is for scheduling an uplink carrier, and carries the second carrier indication or a third carrier indication. In other words, a type of the uplink carrier scheduled by using the third DCI format may be the same as a type of the uplink carrier scheduled by using the first DCI format. For example, the uplink carrier scheduled by using the first DCI format and the uplink carrier scheduled by using the third DCI format may be two supplementary uplink carriers in a same cell. A type of the uplink carrier scheduled by using the third DCI format may alternatively be different from a type of the uplink carrier scheduled by using the first DCI format. For example, the uplink carrier scheduled by using the first DCI format and the uplink carrier scheduled by using the third DCI format may be uplink carriers in different cells.

The plurality of DCI formats may further include a fourth DCI format. The fourth DCI format is for scheduling a downlink carrier, and carries the first carrier indication; and an information bit quantity of the fourth DCI format is configured to be the same as the information bit quantity of the second DCI format. In other words, the network device configures the fourth DCI format for the terminal device. The downlink carrier scheduled by using the fourth DCI format and the uplink carrier scheduled by using the first DCI format correspond to a same carrier indication, for example, are uplink and downlink carriers in a same cell or a normal uplink carrier and a downlink carrier corresponding to the normal uplink carrier that are in a same cell. DCI in the fourth DCI format may alternatively be virtual DCI configured by the network device for the terminal device, and is not actually for scheduling a carrier. Therefore, the fourth DCI format may alternatively not carry a carrier indication, and is only for enabling a payload size of at least one DCI format and a payload size of the fourth DCI format to keep same. The information bit quantity of the fourth DCI format is configured to be the same as the information bit quantity of the second DCI format. When the payload size of the first DCI format is the information bit quantity of the fourth DCI format, if the second DCI format is not padded or truncated, it is equivalent to that the payload size of the first DCI format is the same as the information bit quantity of the second DCI format. Specifically, the first DCI format may be padded or truncated, so that the payload size of the first DCI format is the information bit quantity of the fourth DCI format. Because the second DCI format is not padded or truncated, the payload size of the second DCI format is the information bit quantity of the second DCI format. In other words, the network device uses the information bit quantity of the fourth DCI format to finally enable the payload size of the first DCI format and the payload size of the second DCI format to keep same, to reduce a quantity of payload sizes of different DCI formats that need to be monitored by the terminal device.

Optionally, the fourth DCI format may be for scheduling an uplink carrier, and carry the second carrier indication; and an information bit quantity of the fourth DCI format is configured to be the same as the information bit quantity of the first DCI format. In other words, the network device configures the fourth DCI format for the terminal device. The uplink carrier scheduled by using the fourth DCI format and the downlink carrier scheduled by using the second DCI format correspond to a same carrier indication, for example, are uplink and downlink carriers in a same cell or a downlink carrier and a normal uplink carrier corresponding to the downlink carrier that are in a same cell. DCI in the fourth DCI format may alternatively be virtual DCI configured by the network device for the terminal device, and is not actually for scheduling a carrier. Therefore, the fourth DCI format may alternatively not carry a carrier indication, and is only for enabling a payload size of at least one DCI format and a payload size of the fourth DCI format to keep same. The information bit quantity of the fourth DCI format is configured to be the same as the information bit quantity of the first DCI format. When the payload size of the second DCI format is the information bit quantity of the fourth DCI format, if the first DCI format is not padded or truncated, it is equivalent to that the payload size of the second DCI format is the same as the information bit quantity of the first DCI format. Specifically, the second DCI format may be padded or truncated, so that the payload size of the second DCI format is the information bit quantity of the fourth DCI format. Because the first DCI format is not padded or truncated, the payload size of the first DCI format is the information bit quantity of the first DCI format. In other words, the network device uses the information bit quantity of the fourth DCI format to finally enable the payload size of the second DCI format and the payload size of the first DCI format to keep same, to reduce a quantity of payload sizes of different DCI formats that need to be monitored by the terminal device.

In this solution, the network device introduces the fourth DCI format, so that determining of a payload size of cross-carrier DCI by the terminal device can be avoided, and complexity of monitoring the DCI by the terminal device can be reduced. In addition, when another cell is deactivated, the aligned payload size of the first DCI format can keep unchanged, and impact of a payload size of a DCI format in the deactivated cell on the payload size of the first DCI format can be avoided.

The plurality of DCI formats may further include a fifth DCI format. The fifth DCI format is for scheduling a downlink carrier, and carries the first carrier indication; and an information bit quantity of the fifth DCI format is the same as the information bit quantity of the second DCI format. In other words, the network device configures the fifth DCI format for the terminal device. The downlink carrier scheduled by using the fifth DCI format and the uplink carrier scheduled by using the first DCI format are carriers indicated by a same carrier indication, for example, are uplink and downlink carriers in a same cell or a normal uplink carrier and a downlink carrier corresponding to the normal uplink carrier that are in a same cell. DCI in the fifth DCI format may alternatively be virtual DCI configured by the network device for the terminal device, and is not actually for scheduling a carrier. Therefore, the fifth DCI format may alternatively not carry a carrier indication, and is only for enabling payload sizes of the plurality of DCI formats to keep same. In this case, the second carrier indication carried in the second DCI format may indicate a carrier in a primary cell or a secondary cell. Therefore, the carrier scheduled by using the second DCI format may be a downlink carrier in the primary cell, or may be a downlink carrier in the secondary cell. The network device configures the information bit quantity of the fifth DCI format to be the same as the information bit quantity of the second DCI format. Therefore, the network device enables the payload size of the first DCI format to be the information bit quantity of the fifth DCI format. It is equivalent to that the payload size of the first DCI format and the payload size of the second DCI format keep same. That is, the payload size of the first DCI format is the same as the payload size of the DCI format for scheduling the downlink carrier in the primary cell, or is the same as the payload size of the DCI format for scheduling the downlink carrier in the secondary cell. Specifically, the first DCI format may be padded or truncated, so that the payload size of the first DCI format is the information bit quantity of the fifth DCI format.

In addition, the network device may further align the sizes of the different DCI formats in a grouping manner. For example, a plurality of pieces of DCI in the first DCI format may be grouped. Alternatively, at least one piece of DCI in the second DCI format may be grouped together with at least one piece of DCI in the first DCI format. Alternatively, at least one piece of DCI in the third DCI format may be added. That is, at least one piece of DCI in the first DCI format and at least one piece of DCI in the second DCI format may be grouped together with the at least one piece of DCI in the third DCI format. The network device aligns payload sizes of DCI formats in each group. For a specific alignment manner, refer to the foregoing method for aligning the payload sizes of the first DCI format and the second DCI format. Payload sizes of DCI formats in different groups may be different.

A specific grouping manner may be performing grouping based on a frequency of a carrier. For example, DCI formats each for scheduling a high-frequency carrier are grouped together, and DCI formats each for scheduling a low-frequency carrier are grouped together. Grouping may be performed based on a bandwidth size of a carrier. For example, DCI formats corresponding to carriers whose bandwidth sizes are greater than or equal to a first threshold are grouped together, and DCI formats corresponding to carriers whose bandwidth sizes are less than the first threshold are grouped together. Grouping may be performed based on an information bit quantity of a DCI format. For example, DCI formats whose information bit quantities are greater than or equal to a second threshold are grouped together, and DCI formats whose information bit quantities are less than the second threshold are grouped together. Alternatively, grouping may be performed based on information reported by the terminal device, where the information reported by the terminal device may be at least one frequency band group, each frequency band group includes at least one frequency band, and each frequency band includes one or more carriers. Therefore, DCI formats for scheduling carriers in a same frequency band group may be grouped together when grouping is performed.

When configuring information bit quantities of the plurality of DCI formats that need to be monitored by the terminal device, the network device needs to consider that a total quantity of payload sizes of the different DCI formats to be monitored by the terminal device or a total quantity of payload sizes of different DCI formats scrambled by using C-RNTIs and to be monitored by the terminal device cannot exceed a specified quantity. For example, the total quantity of the sizes of the different DCI formats to be monitored by the terminal device cannot exceed 4, or the total quantity of sizes of the different DCI formats scrambled by using the C-RNTIs and to be monitored by the terminal device cannot exceed 3. When the foregoing condition is satisfied, the network device no longer aligns the payload sizes of the different DCI formats. When the foregoing condition is not satisfied, the network device may align the payload sizes of the different DCI formats in the foregoing manner, to reduce the quantity of payload sizes of the different DCI formats that need to be monitored by the terminal device.

302: The network device sends DCI in the plurality of DCI formats.

The network device sends the DCI in the plurality of configured DCI formats to the terminal device. The payload sizes of the plurality of DCI formats have been accordingly aligned according to the method in step 301. Therefore, when monitoring the DCI, the terminal device accordingly monitors the DCI in the plurality of DCI formats configured by the network device for the terminal device, and the total quantity of payload sizes of the different DCI formats or the total quantity of payload sizes of the different DCI formats scrambled by using the C-RNTIs and to be monitored by the terminal device does not exceed the specified quantity.

303: The terminal device determines the payload size of the first DCI format, where the payload size of the first DCI format is the same as the payload size of the second DCI format; the first DCI format is for scheduling the uplink carrier, and carries the first carrier indication; the second DCI format is for scheduling the downlink carrier, and carries the second carrier indication; and the first carrier indication is different from the second carrier indication.

In other words, when the different DCI formats to be monitored by the terminal device are for scheduling carriers indicated by different carrier indications, the terminal device first needs to determine the payload size of the first DCI format, thereby monitoring the DCI based on the determined payload size.

For example, the payload size of the first DCI format may be the information bit quantity of the DCI format whose information bit quantity is largest in the plurality of DCI formats that need to be monitored by the terminal device. The plurality of DCI formats include the first DCI format and the second DCI format. If the network device aligns the payload size of the first DCI format with the payload size of the second DCI format, the terminal device may determine that the payload size for monitoring the DCI is the payload size of the first DCI format.

Alternatively, if the plurality of DCI formats further include the third DCI format, the payload size of the first DCI format may alternatively be the information bit quantity of the DCI format whose information bit quantity is largest in the plurality of DCI formats that need to be monitored by the terminal device. The third DCI format is for scheduling the uplink carrier, and carries the second carrier indication or the third carrier indication. The third carrier indication indicates a carrier different from carriers indicated by both the first carrier indication and the second carrier indication.

Alternatively, if the plurality of DCI formats further include the fourth DCI format, the payload size of the first DCI format may be the information bit quantity of the DCI format whose information bit quantity is largest in the plurality of DCI formats that need to be monitored by the terminal device, or may be the information bit quantity of the fourth DCI format. The fourth DCI format is for scheduling the downlink carrier, and carries the first carrier indication. The information bit quantity of the fourth DCI format is configured to be the same as the information bit quantity of the second DCI format. In this case, the payload size of the first DCI format is the information bit quantity of the fourth DCI format. If the second DCI format is not padded or truncated, it is equivalent to that the payload size of the first DCI format is the same as the information bit quantity of the second DCI format. Because the second DCI format is not padded or truncated, the payload size of the second DCI format is the information bit quantity of the second DCI format. In other words, the network device uses the information bit quantity of the fourth DCI format to finally enable the payload size of the first DCI format and the payload size of the second DCI format to keep same, to reduce the quantity of payload sizes of the different DCI formats that need to be monitored by the terminal device.

Alternatively, the fourth DCI format may be for scheduling the uplink carrier, and carry the second carrier indication. The information bit quantity of the fourth DCI format is configured to be the same as the information bit quantity of the first DCI format. When the payload size of the second DCI format is the information bit quantity of the fourth DCI format, if the first DCI format is not padded or truncated, it is equivalent to that the payload size of the second DCI format is the same as the information bit quantity of the first DCI format. Because the first DCI format is not padded or truncated, the payload size of the first DCI format is the information bit quantity of the first DCI format. In other words, the network device uses the information bit quantity of the fourth DCI format to finally enable the payload size of the second DCI format and the payload size of the first DCI format to keep same, to reduce the quantity of payload sizes of the different DCI formats that need to be monitored by the terminal device. It should be understood that the fourth DCI format may alternatively carry no carrier indication when the fourth DCI format is the virtual DCI configured by the network device for the terminal device.

Alternatively, when the first carrier indication carried in the first DCI format indicates the carrier in the secondary cell, and the second carrier indication carried in the second DCI format indicates the carrier in the primary cell, the payload size of the first DCI format may be the information bit quantity of the second DCI format.

Alternatively, when the first carrier indication carried in the first DCI format indicates the carrier in the secondary cell, and the second carrier indication carried in the second DCI format indicates the carrier in the primary cell or the secondary cell, the payload size of the first DCI format may be the information bit quantity of the fifth DCI format. The fifth DCI format is for scheduling the downlink carrier, and carries the first carrier indication; and the information bit quantity of the fifth DCI format is configured to be the same as the information bit quantity of the second DCI format.

304: The terminal device monitors DCI in the first DCI format. The terminal device monitors the DCI in the first DCI format based on the determined payload size of the first DCI format.

Specifically, because a payload size of first DCI is the same as a payload size of second DCI, the terminal device may monitor DCI in a plurality of DCI formats in a same search space when monitoring the DCI based on a same payload size. For example, the terminal device may monitor the DCI in the first DCI format and DCI in the second DCI format in a first search space. The first search space is a search space corresponding to the carrier indication carried in the second DCI format. Alternatively, the first search space may be a subset of a search space corresponding to the carrier indication carried in the first DCI format. That is, the DCI in the first DCI format and the DCI in the second DCI format are monitored in the subset. The terminal device monitors DCI in different DCI formats in a same search space or a subset of a same search space. This reduces a quantity of search spaces, and saves a time-frequency resource. In addition, this also reduces a quantity of search spaces that need to be monitored by the terminal device, and helps reduce power consumption of the terminal device.

In the method shown in FIG. 3, step 303 may alternatively be performed before step 302 or step 301. In other words, before aligning the payload sizes of the different DCI formats, the network device may first send, to the terminal device, configuration information of the DCI formats that need to be monitored by the terminal device. After receiving the configuration information, the terminal device may perform step 303, that is, determine the payload size of the first DCI format. The configuration information sent by the network device to the terminal device may include configuration information such as the DCI formats that need to be monitored by the terminal device, an information bit quantity of each DCI format, and the search spaces for monitoring the DCI in the plurality of DCI formats by the terminal device. It should be understood that, in the method shown in FIG. 3, only the following needs to be ensured: Step 302 is performed before step 304, step 301 is performed before step 302, and step 303 is performed before step 304. Another sequence of performing the steps is not limited in this embodiment of this application.

In the downlink control information alignment method provided in this embodiment of this application, the network device aligns the payload sizes of the plurality of DCI formats, so that when monitoring the DCI, the terminal device can monitor the DCI in the first DCI format based on the determined payload size of the first DCI format, to reduce the quantity of payload sizes of the different DCI formats that need to be monitored by the terminal device, and reduce the complexity of monitoring the DCI by the terminal device. The network device may further group the plurality of DCI formats that need to be monitored by the terminal device, and enable the payload sizes of the DCI formats in each group to be same. This can reduce the quantity of payload sizes of the different DCI formats that need to be monitored by the terminal device; and avoid a resource waste caused by excessive zero padding performed on some DCI for size alignment, or avoid information incompleteness caused by excessive truncation performed on some DCI for size alignment.

With reference to specific scenarios, the following describes the downlink control information size alignment method provided in embodiments of this application.

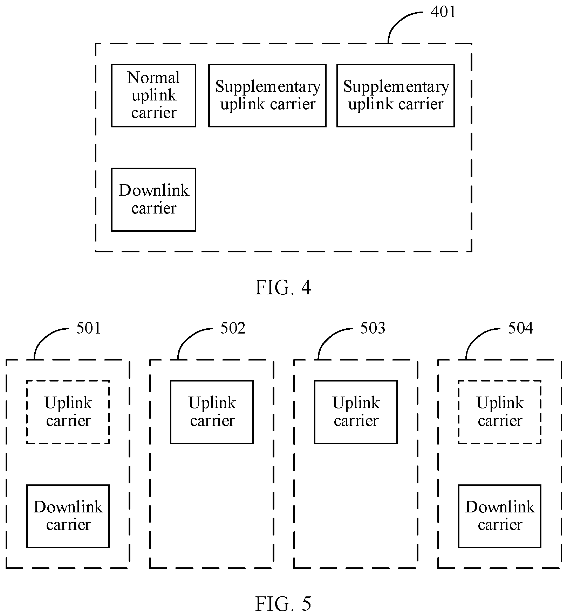

FIG. 4 is a schematic diagram of a downlink control information size alignment scenario according to an embodiment of this application.

The scenario shown in FIG. 4 shows a case in which there are a plurality of supplementary uplink carriers in a cell configured by a network device for a terminal device. For example, the network device configures a cell 401 for the terminal device, and one normal uplink carrier and a plurality of supplementary uplink carriers are configured in the cell 401. The normal uplink carrier corresponds to one downlink carrier. In other words, the normal uplink carrier and the downlink carrier belong to a same frequency band. In other words, the normal uplink carrier and the downlink carrier have a same frequency reference point. In other words, a carrier indication carried in a DCI format for scheduling the normal uplink carrier is the same as a carrier indication carried in a DCI format for scheduling the downlink carrier. Neither of the plurality of supplementary uplink carriers have a corresponding downlink carrier. In other words, at least one supplementary uplink carrier and the downlink carrier belong to different frequency bands. In other words, the at least one supplementary uplink carrier and the downlink carrier have different frequency reference points. In other words, a carrier indication carried in a DCI format for scheduling the supplementary uplink carrier is different from the carrier indication carried in the DCI format for scheduling the downlink carrier. For example, a DCI format for scheduling one supplementary uplink carrier may be a first DCI format, the DCI format for scheduling the downlink carrier may be a second DCI format, and a DCI format for scheduling the other supplementary uplink carrier may be a third DCI format. Optionally, the normal uplink carrier and the supplementary uplink carriers may share a same hybrid automatic repeat request (hybrid automatic repeat request, HARQ) entity (entity).

When the network device configures, for the terminal device, DCI for scheduling a carrier in the cell 401, a DCI format whose information bit quantity is larger may be determined in DCI formats corresponding to both supplementary uplink carriers. That is, the DCI format whose information bit quantity is larger is determined in the first DCI format and the third DCI format, so that payload sizes of the DCI formats corresponding to both the supplementary uplink carriers in the cell 401 are the same as the information bit quantity of the DCI format whose information bit quantity is larger, to reduce a quantity of payload sizes of different DCI formats to be monitored by the terminal device. In other words, the network device may enable payload sizes of the first DCI format and the third DCI format to be the same as the information bit quantity of the determined DCI format whose information bit quantity is larger. In this case, the terminal device may perform monitoring based on the payload size of the first DCI format when monitoring DCI in the first DCI format, and may also perform monitoring based on a same payload size when monitoring DCI in the third DCI format. The network device may alternatively determine a DCI format whose information bit quantity is largest in a part of supplementary uplink carriers, for example, determine the DCI format whose information bit quantity is largest in the first DCI format or the third DCI format, so that a payload size of a DCI format corresponding to the part of supplementary uplink carriers is the same as the information bit quantity of the DCI format whose information bit quantity is largest. That is, a payload size of the first DCI format or the third DCI format is the same as the information bit quantity of the DCI format whose information bit quantity is largest. In this case, the terminal device may perform monitoring based on the payload size of the first DCI format when monitoring DCI in the first DCI format, and may also perform monitoring based on a same payload size when monitoring DCI in the third DCI format.

Optionally, a DCI format whose information bit quantity is largest may be determined in the DCI formats corresponding to the supplementary uplink carriers and the DCI format corresponding to the normal uplink carrier, so that the payload sizes of the DCI formats corresponding to both the supplementary uplink carriers and a payload size of the DCI format corresponding to the normal uplink carrier in the cell 401 are the same as information bit quantity of the DCI format whose information bit quantity is largest, to reduce the quantity of payload sizes of the different DCI formats to be monitored by the terminal device.

Optionally, the network device may configure a fourth DCI format. The fourth DCI format may be for aligning the payload size of the first DCI format. The fourth DCI format is for scheduling a downlink carrier, and carries a first carrier indication. That is, the uplink carrier scheduled by using the first DCI format and the downlink carrier scheduled by using the fourth DCI format correspond to a same carrier indication. An information bit quantity of the fourth DCI format is configured to be the same as an information bit quantity of the second DCI format. That is, when the payload size of the first DCI format is the information bit quantity of the fourth DCI format, if the second DCI format is not padded or truncated, it is equivalent to that the payload size of the first DCI format is the same as the information bit quantity of the second DCI format. Because the second DCI format is not padded or truncated, a payload size of the second DCI format is the information bit quantity of the second DCI format. In other words, the network device uses the information bit quantity of the fourth DCI format to finally enable the payload size of the first DCI format and the payload size of the second DCI format to keep same. In this way, the quantity of payload sizes of the different DCI formats can be reduced.

The fourth DCI format configured by the network device may alternatively be for aligning the payload size of the third DCI format. In this case, a downlink carrier scheduled by using the fourth DCI format and the uplink carrier scheduled by using the third DCI format correspond to a same carrier indication. An information bit quantity of the fourth DCI format is configured to be the same as an information bit quantity of the second DCI format. That is, when the payload size of the third DCI format is the information bit quantity of the fourth DCI format, if the second DCI format is not padded or truncated, it is equivalent to that the payload size of the third DCI format is the same as the information bit quantity of the second DCI format. Because the second DCI format is not padded or truncated, a payload size of the second DCI format is the information bit quantity of the second DCI format. In other words, the network device uses the information bit quantity of the fourth DCI format to finally enable the payload size of the third DCI format and the payload size of the second DCI format to keep same. The quantity of payload sizes of the different DCI formats can also be reduced.

In addition, in the scenario shown in FIG. 4, the first carrier indication may indicate one of the plurality of supplementary uplink carriers, and a second carrier indication may indicate the downlink carrier corresponding to the normal uplink carrier. That is, the supplementary uplink carrier scheduled by using the first DCI format that carries the first carrier indication and the downlink carrier scheduled by using the second DCI format that carries the second carrier indication are not uplink and downlink carriers corresponding to each other. In other words, the first DCI format and the second DCI format carry different carrier indications. In this case, according to the solution provided in this embodiment of this application, when monitoring DCI in the different DCI formats, the terminal device enables the payload size of the first DCI format to be the same as the payload size of the second DCI format, and monitors the DCI in the different DCI formats based on the same payload size.

A plurality of DCI formats that need to be monitored by the terminal device in the cell 401 may further be grouped, so that payload sizes of DCI formats in each group are the same, and payload sizes of DCI formats in different groups may be different. For example, the payload sizes of the DCI formats in each group may be enabled to be the same as an information bit quantity of a DCI format whose information bit quantity is largest in the group, and the payload sizes of the DCI formats in the different groups are not required to be the same. In a grouping process, the DCI formats corresponding to both the supplementary uplink carriers may be grouped, the DCI formats for scheduling the supplementary uplink carriers may be grouped together with the DCI format for scheduling the normal uplink carrier, or the corresponding DCI format for scheduling the downlink carrier may be added to be grouped together with the DCI formats for scheduling the supplementary uplink carriers and the DCI format for scheduling the normal uplink carrier.

A specific grouping manner may be performing grouping based on a frequency of a carrier. For example, DCI formats each for scheduling a high-frequency carrier are grouped together, and DCI formats each for scheduling a low-frequency carrier are grouped together. Grouping may be performed based on a bandwidth size of a carrier. For example, DCI formats corresponding to carriers whose bandwidth sizes are greater than or equal to a first threshold are grouped together, and DCI formats corresponding to carriers whose bandwidth sizes are less than the first threshold are grouped together. Grouping may be performed based on an information bit quantity of a DCI format. For example, DCI formats whose information bit quantities are greater than or equal to a second threshold are grouped together, and DCI formats whose information bit quantities are less than the second threshold are grouped together.

The foregoing specific grouping manners are merely examples, and constitute no limitation. It should be understood that the plurality of DCI formats may be grouped in a plurality of manners. For example, a preset grouping manner may be configured in the network device, and the terminal device performs, when grouping needs to be performed, grouping in the manner specified by the network device.

In the foregoing manner of aligning the payload sizes of the DCI formats, because a DCI format whose information bit quantity is largest is determined in the plurality of DCI formats, the network device may enable, through padding, a payload size of another DCI format to be the same as that of the DCI format whose information bit quantity is largest. In addition, when payload sizes of the plurality of DCI formats need to be the same as a payload size that is of a DCI format and that is specified by the network device, for a DCI format whose information bit quantity is greater than the specified payload size of the DCI format, the network device may enable, through truncation, the payload sizes of the plurality of DCI formats to be the same as the specified payload size of the DCI format; and for a DCI format whose information bit quantity is less than the specified payload size of the DCI format, the network device may enable, through padding, the payload sizes of the plurality of DCI formats to be the same as the specified payload size of the DCI format. For example, when the payload size of the first DCI format needs to be the same as the information bit quantity of the fourth DCI format, and an information bit quantity of the first DCI format is greater than the information bit quantity of the fourth DCI format, the network device may truncate the first DCI format, so that payload sizes of the first DCI format and the fourth DCI format are the same; or when the payload size of the first DCI format needs to be the same as the information bit quantity of the fourth DCI format, and an information bit quantity of the first DCI format is less than the information bit quantity of the fourth DCI format, the network device may pad the first DCI format, so that payload sizes of the first DCI format and the fourth DCI format are the same.

In addition, if a total quantity of the sizes of the different DCI formats to be monitored by the terminal device or a total quantity of sizes of different DCI formats scrambled by using C-RNTIs and to be monitored by the terminal device does not exceed a specified quantity, for example, the total quantity of the sizes of the different DCI formats to be monitored by the terminal device does not exceed 4, or the total quantity of sizes of the different DCI formats scrambled by using the C-RNTIs and to be monitored by the terminal device does not exceed 3, the network device no longer aligns the sizes of the different DCI formats through zero padding or truncation.

In the downlink control information alignment method provided in this embodiment of this application, in the scenario in which the plurality of supplementary uplink carriers are configured in one cell, the network device aligns the payload sizes of the plurality of DCI formats, so that when monitoring the DCI, the terminal device can monitor the DCI in the first DCI format based on the determined payload size of the first DCI format, to reduce the quantity of payload sizes of the different DCI formats that need to be monitored by the terminal device, and reduce complexity of monitoring the DCI by the terminal device. The network device may further group the plurality of DCI formats that need to be monitored by the terminal device, and enable the payload sizes of the DCI formats in each group to be same. This can reduce the quantity of payload sizes of the different DCI formats that need to be monitored by the terminal device; and avoid a resource waste caused by excessive padding performed on some DCI for payload size alignment, or avoid information incompleteness caused by excessive truncation performed on some DCI for payload size alignment.

FIG. 5 is a schematic diagram of another downlink control information size alignment scenario according to an embodiment of this application.

The scenario shown in FIG. 5 shows a case in which a network device configures, for a terminal device, at least one cell in which there is no downlink carrier but only an uplink carrier. For example, the network device configures a primary cell 501, a secondary cell 502, and a secondary cell 503 for the terminal device. At least a downlink carrier is configured in the primary cell 501. Optionally, an uplink carrier may further be configured in the primary cell 501. Therefore, a carrier indication carried in a DCI format for scheduling the uplink carrier is the same as a carrier indication carried in a DCI format for scheduling the downlink carrier. An uplink carrier is configured in each of the secondary cell 502 and the secondary cell 503. However, neither of the uplink carriers configured in the secondary cells have a corresponding downlink carrier. In other words, a downlink carrier is configured in neither of the secondary cells. If the uplink carriers in the secondary cell 502 and the secondary cell 503 are both scheduled by using DCI in the primary cell 501, carrier indications carried in DCI formats for scheduling the uplink carriers in the secondary cell 502 and the secondary cell 503 are different from the carrier indication carried in the DCI format for scheduling the downlink carrier in the primary cell 501. Because the secondary cell 502 and the secondary cell 503 are two different cells, the carrier indications carried in the DCI formats for scheduling the uplink carriers are also different. Optionally, the network device may further configure a secondary cell 504 for the terminal device. At least a downlink carrier is configured in the secondary cell 504. Optionally, an uplink carrier may be configured. In this case, DCI for scheduling an uplink carrier in another cell may be monitored on the downlink carrier in the secondary cell 504. In this embodiment of this application, only an example in which DCI for scheduling an uplink carrier in another cell is monitored on the downlink carrier in the primary cell 501 is used for description.

The DCI format for scheduling the uplink carrier in the secondary cell 502 may be a first DCI format, and carry a first carrier indication; the DCI format for scheduling the downlink carrier in the primary cell 501 may be a second DCI format, and carry a second carrier indication; the DCI format for scheduling the uplink carrier in the secondary cell 503 may be a third DCI format, and carry a third carrier indication; and the DCI format for scheduling the uplink carrier in the primary cell 501 may be the third DCI format, and carry the second carrier indication. Optionally, a DCI format for scheduling the downlink carrier in the secondary cell 504 may be the second DCI format, and carry a carrier indication different from the second carrier indication. It should be understood that, in this embodiment of this application, that two DCI formats carry a same carrier indication may alternatively be understood as that carriers scheduled by using two pieces of DCI belong to a same cell.

When cells configured by the network device for the terminal device are the primary cell 501 and the secondary cell 502, a payload size of the second DCI format for scheduling the downlink carrier in the primary cell 501 may be aligned with a payload size of the first DCI format for scheduling the uplink carrier in the secondary cell 502. For example, a DCI format whose information bit quantity is larger in the two DCI formats may be determined, so that the payload sizes of the two DCI formats are the same as the information bit quantity of the DCI format whose information bit quantity is larger. Specifically, a DCI format whose information bit quantity is smaller may be padded, so that a payload size of the DCI format whose information bit quantity is smaller is the same as the information bit quantity of the DCI format whose information bit quantity is larger. Because the DCI format whose information bit quantity is larger is not padded or truncated, a payload size of the DCI format whose information bit quantity is larger is the information bit quantity of the DCI format whose information bit quantity is larger. In this downlink control information alignment manner, impact, on DCI scheduling, of information incompleteness caused by truncation of a DCI format can be avoided.

When the network device configures, for the terminal device, DCI for scheduling the carriers in the primary cell 501, the secondary cell 502, and the secondary cell 503, a DCI format whose information bit quantity is larger may be determined in the DCI formats, namely, the first DCI format and the third DCI format, for scheduling the uplink carriers in the secondary cell 502 and the secondary cell 503, so that payload sizes of the DCI formats corresponding to the uplink carriers in both secondary cells are the same as the information bit quantity of the DCI format whose information bit quantity is larger, to reduce a quantity of payload sizes of different DCI formats to be monitored by the terminal device.

In this embodiment of this application, a DCI format corresponding to a carrier in a cell may be understood as a DCI format for scheduling the carrier in the cell, and a DCI format corresponding to a carrier may be understood as a DCI format for scheduling the carrier.

Optionally, a DCI format whose information bit quantity is largest may be determined in the DCI format corresponding to the downlink carrier in the primary cell 501 and DCI formats corresponding to all uplink carriers, that is, may be determined in the first DCI format, the second DCI format, and the third DCI format, so that the payload sizes of the first DCI format, the second DCI format, and the third DCI format are the same as the information bit quantity of the DCI format whose information bit quantity is largest. In this case, the payload sizes of the first DCI format, the second DCI format, and the third DCI format are all the same, so that the quantity of payload sizes of the different DCI formats to be monitored by the terminal device can be reduced. An uplink carrier scheduled by using the third DCI format may be the uplink carrier in the primary cell 501, or may be the uplink carrier in the secondary cell 503.

When the uplink carrier is configured in the primary cell, a DCI format whose information bit quantity is largest may further be determined in the DCI format for scheduling the uplink carrier in the primary cell 501, the DCI format for scheduling the downlink carrier in the primary cell 501, and the DCI formats for scheduling the uplink carriers in all secondary cells, so that the payload sizes of the DCI format for scheduling the uplink carrier in the primary cell 501, the DCI format for scheduling the downlink carrier in the primary cell 501, and the DCI formats for scheduling the uplink carriers in all the secondary cells are the same as the information bit quantity of the DCI format whose information bit quantity is largest. In this case, at least the payload sizes of the first DCI format, the second DCI format, and the third DCI format can be enabled to be the same, to reduce the quantity of payload sizes of the different DCI formats to be monitored by the terminal device.

Optionally, the network device may configure a fourth DCI format. The fourth DCI format may be for aligning the payload size of the first DCI format. The fourth DCI format is for scheduling a downlink carrier, and carries the first carrier indication. In other words, the uplink carrier scheduled by using the first DCI format and the downlink carrier scheduled by using the fourth DCI format correspond to a same carrier indication. An information bit quantity of the fourth DCI format is configured to be the same as an information bit quantity of the second DCI format. That is, when the payload size of the first DCI format is the information bit quantity of the fourth DCI format, if the second DCI format is not padded or truncated, it is equivalent to that the payload size of the first DCI format and the information bit quantity of the second DCI format keep same. Because the second DCI format is not padded or truncated, the payload size of the second DCI format is the information bit quantity of the second DCI format. In other words, the network device uses the information bit quantity of the fourth DCI format to finally enable the payload size of the first DCI format and the payload size of the second DCI format to keep same. In this way, the quantity of payload sizes of the different DCI formats can be reduced.

The fourth DCI format configured by the network device may alternatively be for aligning the payload size of the third DCI format. In this case, a downlink carrier scheduled by using the fourth DCI format and the uplink carrier scheduled by using the third DCI format correspond to a same carrier indication. An information bit quantity of the fourth DCI format is configured to be the same as an information bit quantity of the second DCI format. That is, when the payload size of the third DCI format is the information bit quantity of the fourth DCI format, if the second DCI format is not padded or truncated, it is equivalent to that the payload size of the third DCI format is the same as the information bit quantity of the second DCI format. Because the second DCI format is not padded or truncated, the payload size of the second DCI format is the information bit quantity of the second DCI format. In other words, the network device uses the information bit quantity of the fourth DCI format to finally enable the payload size of the third DCI format and the payload size of the second DCI format to keep same. The quantity of payload sizes of the different DCI formats can also be reduced.

In addition, in the scenario shown in FIG. 5, the first carrier indication may indicate the uplink carrier in one of the plurality of secondary cells, and the second carrier indication may indicate the downlink carrier in the primary cell. In other words, the uplink carrier scheduled by using the first DCI format and the downlink carrier scheduled by using the second DCI format are carriers in different cells. In other words, the first DCI format and the second DCI format carry different carrier indications. In this case, according to the solution provided in this embodiment of this application, when monitoring DCI in the different DCI formats, the terminal device enables the payload size of the first DCI format to be the same as the payload size of the second DCI format, and monitors the DCI in the different DCI formats based on the same payload size. A plurality of DCI formats that need to be monitored by the terminal device in the primary cell 501, the secondary cell 502, and the secondary cell 503 may further be grouped, so that payload sizes of DCI formats in each group are the same, and payload sizes of DCI formats in different groups may be different. For example, the payload sizes of the DCI formats in each group may be enabled to be the same as an information bit quantity of a DCI format whose information bit quantity is largest in the group, and the payload sizes of the DCI formats in the different groups are not required to be the same. In a grouping process, the DCI formats corresponding to the uplink carriers in all the secondary cells may be grouped, the DCI formats corresponding to the uplink carriers in the secondary cells may be grouped together with the DCI format corresponding to the uplink carrier in the primary cell, or the DCI format corresponding to the downlink carriers may be added to be grouped together with the DCI formats corresponding to the uplink carriers in the secondary cells and the DCI format corresponding to the uplink carrier in the primary cell. If the network device configures, for the terminal device, a plurality of cells that each have both an uplink carrier and a downlink carrier, the network device specifies one cell, groups DCI formats corresponding to an uplink carrier and a downlink carrier in the cell and DCI formats corresponding to uplink carriers in all cells that have only the uplink carriers together, and aligns payload sizes of the DCI formats in the group.

A specific grouping manner may be performing grouping based on a frequency of a carrier. For example, DCI formats each for scheduling a high-frequency carrier are grouped together, and DCI formats each for scheduling a low-frequency carrier are grouped together. Grouping may be performed based on a bandwidth size of a carrier. For example, DCI formats corresponding to carriers whose bandwidth sizes are greater than or equal to a first threshold are grouped together, and DCI formats corresponding to carriers whose bandwidth sizes are less than the first threshold are grouped together. Grouping may be performed based on an information bit quantity of a same DCI format. For example, DCI formats whose information bit quantities are greater than or equal to a second threshold are grouped together, and DCI formats whose information bit quantities are less than the second threshold are grouped together.

The foregoing specific grouping manners are merely examples, and constitute no limitation. It should be understood that the plurality of DCI formats may be grouped in a plurality of manners. For example, a preset grouping manner may be configured in the network device, and the terminal device performs, when grouping needs to be performed, grouping in the manner specified by the network device.

In the foregoing manner of aligning the payload sizes of the DCI formats, because a DCI format whose information bit quantity is largest is determined in the plurality of DCI formats, the network device may enable, through padding, a payload size of another DCI format to be the same as that of the DCI format whose information bit quantity is largest. In addition, when payload sizes of the plurality of DCI formats need to be the same as a payload size that is of a DCI format and that is specified by the network device, for a DCI format whose information bit quantity is greater than the specified payload size of the DCI format, the network device may enable, through truncation, the payload sizes of the plurality of DCI formats to be the same as the specified payload size of the DCI format; and for a DCI format whose information bit quantity is less than the specified payload size of the DCI format, the network device may enable, through padding, the payload sizes of the plurality of DCI formats to be the same as the specified payload size of the DCI format. For example, when the payload size of the first DCI format needs to be the same as the information bit quantity of the fourth DCI format, and an information bit quantity of the first DCI format is greater than the information bit quantity of the fourth DCI format, the network device may truncate the first DCI format, so that payload sizes of the first DCI format and the fourth DCI format are the same; or when the payload size of the first DCI format needs to be the same as the information bit quantity of the fourth DCI format, and an information bit quantity of the first DCI format is less than the information bit quantity of the fourth DCI format, the network device may pad the first DCI format, so that payload sizes of the first DCI format and the fourth DCI format are the same.

In addition, if a total quantity of the sizes of the different DCI formats to be monitored by the terminal device or a total quantity of sizes of different DCI formats scrambled by using C-RNTIs and to be monitored by the terminal device does not exceed a specified quantity, for example, the total quantity of the sizes of the different DCI formats to be monitored by the terminal device does not exceed 4, or the total quantity of sizes of the different DCI formats scrambled by using the C-RNTIs and to be monitored by the terminal device does not exceed 3, the network device no longer aligns the sizes of the different DCI formats through zero padding or truncation.

In the scenario shown in FIG. 5, a plurality of uplink carriers are configured in different cells. In addition, when the terminal device monitors DCI, the payload sizes of the first DCI format and the second DCI format are the same. Therefore, the terminal device may monitor DCI in the first DCI format and DCI in the second DCI format in a same search space. Specifically, the terminal device may monitor the DCI in the first DCI format in a first search space. The first search space is a search space corresponding to the carrier indication carried in the second DCI format. That is, the terminal device monitors both the DCI in the first DCI format and the DCI in the second DCI format in the search space corresponding to the carrier indication carried in the second DCI format.

Alternatively, the first search space may be a subset of a search space corresponding to the carrier indication carried in the first DCI format. That is, the terminal device monitors both the DCI in the first DCI format and the DCI in the second DCI format in the subset of the search space corresponding to the carrier indication carried in the first DCI format.

In the downlink control information alignment method provided in this embodiment of this application, in the scenario in which the plurality of cells each have only an uplink carrier are configured for the terminal device, the network device aligns the payload sizes of the DCI formats in the different cells, so that when monitoring the DCI, the terminal device can monitor the DCI in the first DCI format based on the determined payload size of the first DCI format, to reduce the quantity of payload sizes of the different DCI formats that need to be monitored by the terminal device, and reduce complexity of monitoring the DCI by the terminal device. The network device may further group the plurality of DCI formats that need to be monitored by the terminal device, and enable the payload sizes of the DCI formats in each group to be same. This can reduce the quantity of payload sizes of the different DCI formats that need to be monitored by the terminal device; and avoid a resource waste caused by excessive zero padding performed on some DCI for size alignment, or avoid information incompleteness caused by excessive truncation performed on some DCI for size alignment. In addition, the terminal device may monitor DCI in different DCI formats in a same search space or a subset of a same search space. This reduces a quantity of search spaces, and saves a time-frequency resource. In addition, this also reduces a quantity of search spaces that need to be monitored by the terminal device, and helps reduce power consumption of the terminal device.

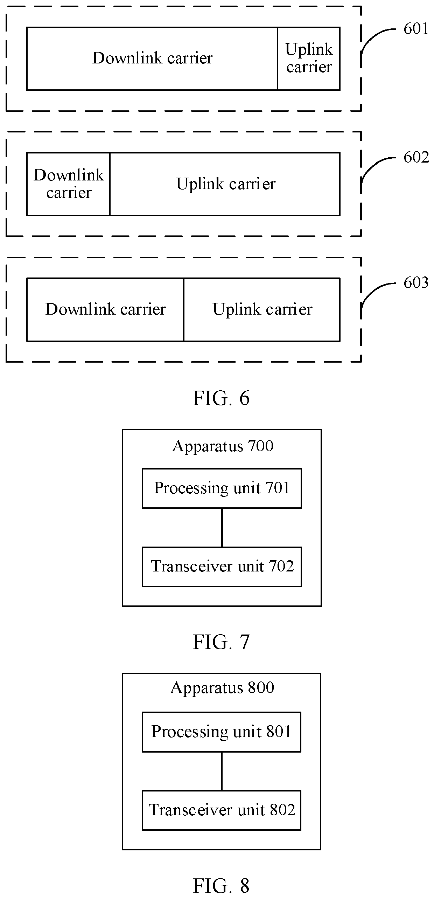

FIG. 6 is a schematic diagram of another downlink control information size alignment scenario according to an embodiment of this application.

The scenario shown in FIG. 6 shows that in two cells configured by a network device for a terminal device, only a downlink carrier is configured, activated, or scheduled in one cell, and only an uplink carrier is configured, activated, or scheduled in the other cell. For example, only a downlink carrier is scheduled in a primary cell 601 configured by the network device for the terminal device, and only an uplink carrier is scheduled in a secondary cell 602 configured by the network device for the terminal device. In this case, a carrier indication carried in a DCI format for scheduling the downlink carrier in the primary cell 601 is different from a carrier indication carried in a DCI format for scheduling the uplink carrier in the secondary cell 602. For example, the DCI format for scheduling the uplink carrier in the secondary cell 602 may be a first DCI format, and the DCI format for scheduling the downlink carrier in the primary cell 601 may be a second DCI format.

To reduce a quantity of payload sizes of different DCI formats to be monitored by the terminal device, the network device may align payload sizes of the DCI format for scheduling the downlink carrier in the primary cell 601 and the DCI format for scheduling the uplink carrier in the secondary cell 602. For example, a DCI format whose information bit quantity is larger in the two DCI formats may be determined, so that the payload sizes of the two DCI formats are the same as the information bit quantity of the DCI format whose information bit quantity is larger. Specifically, a DCI format whose information bit quantity is smaller may be padded, so that a payload size of the DCI format whose information bit quantity is smaller is the same as the information bit quantity of the DCI format whose information bit quantity is larger. In this downlink control information alignment manner, impact, on DCI scheduling, of information incompleteness caused by truncation of a DCI format can be avoided.

Optionally, the payload size of the DCI format for scheduling the uplink carrier in the secondary cell 602 may be aligned with the payload size of the DCI format for scheduling the downlink carrier in the primary cell 601. That is, a payload size of the first DCI format is aligned with a payload size of the second DCI format. Because the second DCI format is not padded or truncated, the payload size of the first DCI format is an information bit quantity of the second DCI format, and the payload size of the second DCI format is the information bit quantity of the second DCI format. Specifically, the payload size of the first DCI format may be enabled to be the information bit quantity of the second DCI format through padding or truncation, so that payload sizes of the first DCI format and the second DCI format are equal. In this downlink control information alignment manner, the payload size of the DCI format for scheduling the downlink carrier in the primary cell does not vary with a configuration of the secondary cell. For example, when the network device reconfigures the secondary cell, releases the secondary cell, or activates/deactivates the secondary cell, the payload size of the DCI format for scheduling the downlink carrier in the primary cell does not vary.

Optionally, a payload size of a DCI format for scheduling an uplink carrier or a downlink carrier in a cell may be aligned by configuring virtual DCI through RRC.

Specifically, the network device configures, through RRC, a virtual DCI format, for example, a fourth DCI format, for the DCI format for scheduling the downlink carrier in the primary cell 601. The fourth DCI format is for scheduling an uplink carrier, and carries a second carrier indication. That is, the uplink carrier scheduled by using the fourth DCI format and the downlink carrier in the primary cell 601 correspond to a same carrier indication. An information bit quantity of the fourth DCI format is configured to be the same as an information bit quantity of the first DCI format. That is, the information bit quantity of the fourth DCI format is the same as an information bit quantity of the DCI format for scheduling the uplink carrier in the secondary cell 602. When the payload size of the second DCI format is the information bit quantity of the fourth DCI format, if the first DCI format is not padded or truncated, it is equivalent to that the payload size of the second DCI format and the information bit quantity of the first DCI format keep same. Because the first DCI format is not padded or truncated, the payload size of the first DCI format is the information bit quantity of the first DCI format. In other words, the network device uses the information bit quantity of the fourth DCI format to finally enable the payload size of the second DCI format and the payload size of the first DCI format to keep same. When the terminal device does not need to perform cross-carrier scheduling, the payload size of the first DCI format is the same as the payload size of the second DCI format, so that complexity of monitoring, by the terminal device, DCI formats for scheduling carriers in different cells can be reduced.

Alternatively, the network device may further configure, through RRC, a virtual DCI format, for example, a fourth DCI format, for the DCI format for scheduling the uplink carrier in the secondary cell 602. The fourth DCI format is for scheduling a downlink carrier, and carries a first carrier indication. That is, the downlink carrier scheduled by using the fourth DCI format and the scheduled uplink carrier in the secondary cell 602 correspond to a same carrier indication. An information bit quantity of the fourth DCI format is configured to be the same as the information bit quantity of the second DCI format. That is, the information bit quantity of the fourth DCI format is the same as an information bit quantity of the DCI format for scheduling the downlink carrier in the primary cell 601. When the payload size of the first DCI format is the information bit quantity of the fourth DCI format, if the second DCI format is not padded or truncated, it is equivalent to that the payload size of the first DCI format and the information bit quantity of the second DCI format keep same. Because the second DCI format is not padded or truncated, the payload size of the second DCI format is the information bit quantity of the second DCI format. In other words, the network device uses the information bit quantity of the fourth DCI format to finally enable the payload size of the first DCI format and the payload size of the second DCI format to keep same. When the terminal device does not need to perform cross-carrier scheduling, the payload size of the first DCI format is the same as the payload size of the second DCI format, so that complexity of monitoring, by the terminal device, DCI formats for scheduling carriers in different cells can be reduced.

It should be understood that because the fourth DCI format is the virtual DCI format configured by the network device for the terminal device, is not actually for scheduling a carrier, and is only for aligning the payload sizes of the different DCI formats, the fourth DCI format may carry a corresponding carrier indication, or may carry no carrier indication.

Optionally, the network device may further configure a fifth DCI format through RRC. The fifth DCI format may be for aligning the payload size of the DCI format for scheduling the uplink carrier in the secondary cell 602, namely, the payload size of the first DCI format. The fifth DCI format may carry the first carrier indication, that is, the carrier indication of the uplink carrier in the secondary cell 602, or may carry no carrier indication. When the network device configures the fifth DCI format, an information bit quantity of the fifth DCI format may be configured to be the same as the information bit quantity of the second DCI format. The second DCI format may be the DCI format for scheduling the downlink carrier in the primary cell 601, or may be a DCI format for scheduling a downlink carrier in another secondary cell, for example, a secondary cell 603. The secondary cell 603 is a cell in which both an uplink carrier and a downlink carrier are configured. In other words, the second carrier indication carried in the second DCI format may indicate a carrier in a primary cell, or may indicate a carrier in a secondary cell. When the payload size of the first DCI format is the information bit quantity of the fifth DCI format, if the second DCI format is not padded or truncated, it is equivalent to that the payload size of the first DCI format is the same as the information bit quantity of the second DCI format. Specifically, the first DCI format may be padded or truncated, so that the payload size of the first DCI format is the information bit quantity of the fifth DCI format. Because the second DCI format is not padded or truncated, the payload size of the second DCI format is the information bit quantity of the second DCI format. In other words, the network device uses the information bit quantity of the fifth DCI format to finally enable the payload size of the first DCI format and the payload size of the second DCI format to keep same. That is, the payload size of the first DCI format is the same as the payload size of the DCI format for scheduling the downlink carrier in the primary cell, or is the same as the payload size of the DCI format for scheduling the downlink carrier in the secondary cell.

It should be understood that the fifth DCI format is a virtually configured DCI format, and DCI in the fifth DCI format does not need to be monitored by the terminal device, and is only for alignment with a payload size of a DCI format for scheduling an uplink carrier or a downlink carrier in a corresponding cell. For example, for the secondary cell 602 in which only the uplink carrier is scheduled, the fifth DCI format may be a DCI format for scheduling a downlink carrier in the secondary cell 602. Because the fifth DCI format is virtually configured, the fifth DCI format may not carry a carrier indication of the downlink carrier in the secondary cell 602.

In this downlink control information alignment manner, determining of a payload size of a cross-carrier DCI format by the terminal device is not added, and complexity of monitoring the DCI by the terminal device can be reduced. In addition, the payload size of the DCI format for scheduling the downlink carrier in the primary cell when the secondary cell is activated/deactivated is not affected, and re-alignment that is of the DCI format for scheduling the downlink carrier in the primary cell and that is caused by activation/deactivation, reconfiguration, or the like of the secondary cell can be avoided.

Cross-carrier scheduling in a plurality of cells is also involved in the scenario shown in FIG. 6. Therefore, when the payload size of the second DCI format for scheduling the downlink carrier in the primary cell 601 is the same as the payload size of the first DCI format for scheduling the uplink carrier in the secondary cell 601, the terminal device may monitor DCI in the first DCI format and DCI in the second DCI format in a same search space. Specifically, the terminal device may monitor the DCI in the first DCI format in a first search space. The first search space is a search space corresponding to the carrier indication carried in the second DCI format. That is, the terminal device monitors both the DCI in the first DCI format and the DCI in the second DCI format in the search space corresponding to the carrier indication carried in the second DCI format.

Alternatively, the first search space may be a subset of a search space corresponding to the carrier indication carried in the first DCI format. That is, the terminal device monitors both the DCI in the first DCI format and the DCI in the second DCI format in the subset of the search space corresponding to the carrier indication carried in the first DCI format.

Likewise, if payload sizes of DCI formats for scheduling the carriers in the secondary cell 603 are the same as the payload sizes of the first DCI format and the second DCI format, the terminal device may also simultaneously monitor the DCI in the foregoing DCI formats in the same search space or the subset of the search space.

In the downlink control information alignment method provided in this embodiment of this application, in the scenario in which the first carrier indication carried in the first DCI format is different from the second carrier indication carried in the second DCI format, the network device aligns the payload sizes of the different DCI formats, so that when monitoring the DCI, the terminal device can monitor the DCI based on the determined payload size of the first DCI format, to reduce the quantity of payload sizes of the different DCI formats that need to be monitored by the terminal device, and reduce the complexity of monitoring the DCI by the terminal device. The network device may further align, by configuring the virtual DCI format, for example, the fourth DCI format or the fifth DCI format, the payload size of the DCI format for scheduling the carrier in the primary cell with the payload size of the DCI format for scheduling the carrier in the secondary cell. This can reduce the quantity of payload sizes of the different DCI formats that need to be monitored by the terminal device, and avoid re-alignment that is of the DCI format for scheduling the downlink carrier in the primary cell and that is caused by a variation of the configuration of the secondary cell. In addition, the terminal device may monitor DCI in different DCI formats in a same search space or a subset of a same search space. This reduces a quantity of search spaces, and saves a time-frequency resource. In addition, this also reduces a quantity of search spaces that need to be monitored by the terminal device, and helps reduce power consumption of the terminal device.

It should be understood that, in the solutions provided in embodiments of this application, in addition to the payload sizes of the different DCI formats, payload sizes of different DCI in a same DCI format can be aligned. Specifically, the different DCI in the same DCI format may carry different carrier indications. That is, the different DCI may schedule different carriers in a same cell or carriers in different cells. Therefore, initially configured information bit quantities of the different DCI may also be different. In this case, according to the solutions provided in embodiments of this application, DCI whose information bit quantities are different in the same DCI format can still be aligned. For example, in the scenario shown in FIG. 4 or FIG. 5, the first DCI format and the third DCI format may be a same DCI format, but carry different carrier indications. In this case, the payload size of the DCI in the first DCI format can still be aligned with the payload size of the DCI in the third DCI format according to the method provided in embodiments of this application.

With reference to FIG. 3 to FIG. 6, the foregoing describes in detail the technical solutions, provided in embodiments of this application, to downlink control information alignment. With reference to FIG. 7 to FIG. 10, the following describes downlink control information alignment apparatuses provided in embodiments of this application.

FIG. 7 is a schematic diagram of a downlink control information size alignment apparatus according to an embodiment of this application. As shown in the figure, the apparatus 700 includes a processing unit 701 and a transceiver unit 702.

In a possible design, the apparatus 700 may correspond to the terminal device in the foregoing method embodiment, for example, may be the terminal device in the method embodiment or a chip configured in the terminal device.

Specifically, the processing unit 701 may be configured to determine a payload size of a first DCI format, where the payload size of the first DCI format is the same as a payload size of a second DCI format; the first DCI format is for scheduling an uplink carrier, and carries a first carrier indication; the second DCI format is for scheduling a downlink carrier, and carries a second carrier indication; and the first carrier indication is different from the second carrier indication. The transceiver unit 702 may be configured to monitor DCI in the first DCI format.

In an embodiment, the processing unit is specifically configured to determine that the payload size of the first DCI format is an information bit quantity of a DCI format whose information bit quantity is largest in a plurality of DCI formats that need to be monitored by a terminal device.

In another embodiment, the plurality of DCI formats further include a third DCI format; the third DCI format is for scheduling an uplink carrier, and carries the second carrier indication or a third carrier indication; and the third carrier indication is different from both the first carrier indication and the second carrier indication.

In another embodiment, the plurality of DCI formats further include a fourth DCI format, where the fourth DCI format is for scheduling a downlink carrier, and carries the first carrier indication; and an information bit quantity of the fourth DCI format is configured to be the same as an information bit quantity of the second DCI format; or the fourth DCI format is for scheduling an uplink carrier, and carries the second carrier indication; and an information bit quantity of the fourth DCI format is configured to be the same as an information bit quantity of the first DCI format.

In another embodiment, the first carrier indication indicates a carrier in a secondary cell, and the second carrier indication indicates a carrier in a primary cell; and the processing unit 701 is specifically configured to determine that the payload size of the first DCI format is an information bit quantity of the second DCI format.

In another embodiment, the first carrier indication indicates a carrier in a secondary cell, and the second carrier indication indicates a carrier in a primary cell or a secondary cell; and the processing unit 701 is specifically configured to determine that the payload size of the first DCI format is an information bit quantity of a fifth DCI format, where the fifth DCI format is for scheduling a downlink carrier, and carries the first carrier indication; and the information bit quantity of the fifth DCI format is configured to be the same as an information bit quantity of the second DCI format.

In another embodiment, the transceiver unit 702 is specifically configured to monitor the DCI in the first DCI format in a first search space, where the first search space is a search space corresponding to the carrier indication carried in the second DCI format, or the first search space is a subset of a search space corresponding to the carrier indication carried in the first DCI format.

FIG. 8 is a schematic diagram of another downlink control information size alignment apparatus according to an embodiment of this application. As shown in the figure, the apparatus 800 may include a processing unit 801 and a transceiver unit 802. The transceiver unit may also be divided into a receiving unit and a sending unit, which respectively perform a receiving-related operation and a sending-related operation. This is not limited herein. In a possible design, the apparatus 800 may correspond to the network device in the foregoing method embodiment.

Specifically, the processing unit 801 may be configured to determine a payload size of a first DCI format, to enable the payload size of the first DCI format to be the same as a payload size of a second DCI format, where the first DCI format is for scheduling an uplink carrier, and carries a first carrier indication; the second DCI format is for scheduling a downlink carrier, and carries a second carrier indication; and the first carrier indication is different from the second carrier indication. The transceiver unit 802 is configured to send DCI in a plurality of DCI formats.

In an embodiment, the processing unit 801 is further configured to configure an information bit quantity of the first DCI format and an information bit quantity of the second DCI format; and when the information bit quantity of the first DCI format is less than the information bit quantity of the second DCI format, the processing unit is specifically configured to pad the first DCI format, to enable the payload size of the first DCI format to be the information bit quantity of the second DCI format.

In another embodiment, the processing unit 801 is specifically configured to determine that the payload size of the first DCI format is an information bit quantity of a DCI format whose information bit quantity is largest in the plurality of DCI formats that need to be monitored by a terminal device.

In another embodiment, the plurality of DCI formats further include a third DCI format; the third DCI format is for scheduling an uplink carrier, and carries the second carrier indication or a third carrier indication; and the third carrier indication is different from both the first carrier indication and the second carrier indication.

In another embodiment, the plurality of DCI formats further include a fourth DCI format, where the fourth DCI format is for scheduling a downlink carrier, and carries the first carrier indication; and an information bit quantity of the fourth DCI format is configured to be the same as an information bit quantity of the second DCI format; or the fourth DCI format is for scheduling an uplink carrier, and carries the second carrier indication; and an information bit quantity of the fourth DCI format is configured to be the same as an information bit quantity of the first DCI format.

In another embodiment, when the first carrier indication indicates a carrier in a secondary cell, and the second carrier indication indicates a carrier in a primary cell, the processing unit 801 is specifically configured to pad or truncate the first DCI format, to enable the payload size of the first DCI format to be the information bit quantity of the second DCI format.

In another embodiment, the first carrier indication indicates a carrier in a secondary cell, and the second carrier indication indicates a carrier in a primary cell or a secondary cell; the processing unit is specifically configured to configure an information bit quantity of a fifth DCI format, where the fifth DCI format is for scheduling a downlink carrier, and carries the first carrier indication; and the information bit quantity of the fifth DCI format is the same as the information bit quantity of the second DCI format; and the processing unit 801 is further configured to pad or truncate the first DCI format, to enable the payload size of the first DCI format to be the information bit quantity of the fifth DCI format.

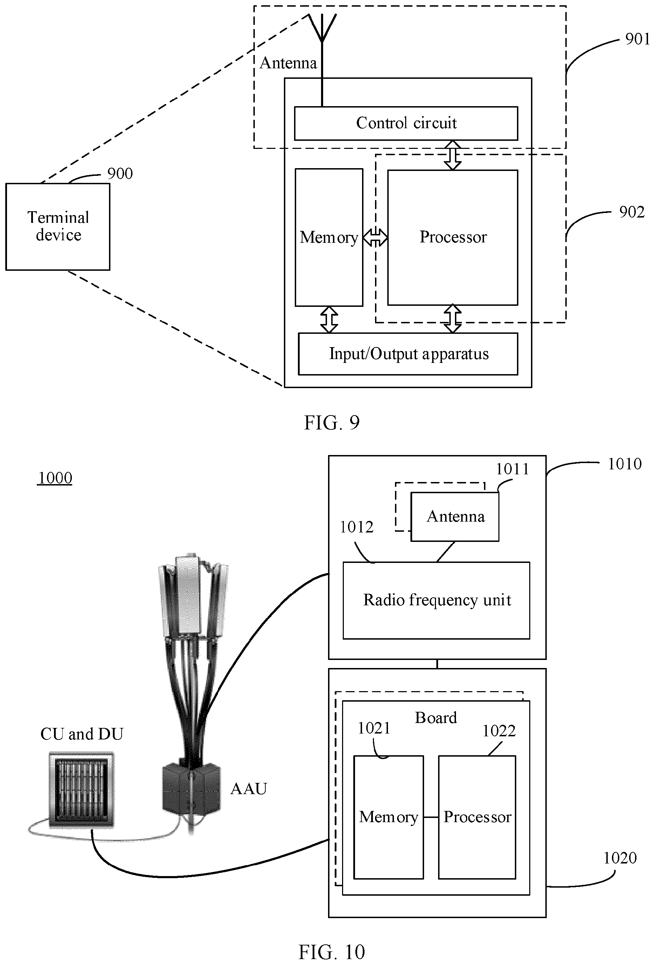

FIG. 9 is a schematic diagram of a structure of a terminal device according to an embodiment of this application. The terminal device 900 may be applied to the system shown in FIG. 1 or FIG. 2. For ease of description, FIG. 9 only shows main components of the terminal device. As shown in FIG. 9, the terminal device 900 includes a processor (corresponding to the processing unit 702 or the processing unit 701 shown in FIG. 7), a memory, a control circuit, an antenna, and an input/output apparatus. The processor is configured to control the antenna and the input/output apparatus to send and receive a signal. The memory is configured to store a computer program. The processor is configured to invoke the computer program from the memory and run the computer program, to perform a corresponding procedure and/or operation performed by the terminal device in the downlink control information size alignment method provided in this application. Details are not described herein again.

A person skilled in the art may understand that, for ease of description, FIG. 9 shows only one memory and only one processor. In an actual terminal device, there may be a plurality of processors and memories. The memory may also be referred to as a storage medium, a storage device, or the like. This is not limited in embodiments of this application.

FIG. 10 is a schematic diagram of a structure of a network device according to an embodiment of this application. The apparatus shown in FIG. 10 may be configured to implement a function of the network device in the foregoing downlink control information size alignment method. That is, FIG. 10 may be the schematic diagram of the structure of the network device.

In a 5G communication system, the network device 1000 may include a CU, a DU, and an AAU. In comparison with a network device that is in an LTE communication system and that includes one or more radio frequency units, for example, a remote radio unit (remote radio unit, RRU), and one or more base band units (base band units, BBUs):

A non-real-time part of an original BBU is obtained through splitting, and redefined as the CU that is responsible for processing a non-real-time protocol and service, some physical layer processing functions of the BBU, an original RRU, and a passive antenna are combined into the AAU, and a remaining function of the BBU is redefined as the DU that is responsible for processing a physical layer protocol and a real-time service. In short, the CU and the DU are distinguished based on real-time performance of processed content, and the AAU is a combination of the RRU and the antenna.

The CU, the DU, and the AAU may be deployed in a separate or integrated manner. Therefore, there may be a plurality of network deployment forms. A possible deployment form is shown in FIG. 1000, and is consistent with a conventional 4G network device. The CU and the DU are deployed on same hardware. It should be understood that FIG. 1000 is merely an example, and constitutes no limitation on the protection scope of this application. For example, the deployment form may alternatively be that the DU is deployed in a 7G BBU equipment room, CUs or DUs are deployed in a centralized manner, or CUs are centralized at a higher level.

The AAU 1010 may implement a transceiver function, is referred to as a transceiver unit 1011, and corresponds to the transceiver unit 802 in FIG. 8. Optionally, the transceiver unit 802 may also be referred to as a transceiver, a transceiver circuit, or the like, and may include at least one antenna 1011 and a radio frequency unit 1012. Optionally, the transceiver unit 1011 may include a receiving unit and a sending unit. The receiving unit may correspond to a receiver (which is also referred to as a receiving circuit), and the sending unit may correspond to a transmitter (which is also referred to as a transmitting circuit). The CU and the DU may implement an internal processing function, are referred to as a processing unit 1020, and correspond to the processing unit 801 in FIG. 8. Optionally, the processing unit 801 may control the network device, and so on, and may be referred to as a controller. The AAU, the CU, and the DU may be physically disposed together, or may be physically disposed separately.

In addition, the network device is not limited to the form shown in FIG. 10, and may alternatively be in another form. For example, the network device includes a BBU and an adaptive radio unit (adaptive radio unit, ARU), or includes a BBU and an active antenna unit (active antenna unit, AAU); may be customer premises equipment (customer premises equipment, CPE); or may be in another form. This is not limited in this application.

It should be understood that the network device 1000 shown in FIG. 10 can implement functions of the network device in any method embodiment in FIG. 3 to FIG. 6. Operations and/or functions of the units in the network device 1000 are separately for implementing corresponding procedures performed by the network device in the method embodiment of this application. To avoid repetition, detailed descriptions are appropriately omitted herein. The structure of the network device shown in FIG. 10 is merely a possible form, and should not constitute any limitation on embodiments of this application. This application does not exclude a possibility of a structure of a network device in another form in the future.

An embodiment of this application further provides a communication system, including the foregoing terminal device and the foregoing network device.

This application further provides a computer-readable storage medium. The computer-readable storage medium stores instructions. When the instructions are run on a computer, the computer is enabled to perform the steps performed by the terminal device in the methods shown in FIG. 3.

This application further provides a computer-readable storage medium. The computer-readable storage medium stores instructions. When the instructions are run on a computer, the computer is enabled to perform the steps performed by the network device in the method shown in FIG. 3.

This application further provides a computer program product including instructions. When the computer program product runs on a computer, the computer is enabled to perform the steps performed by the terminal device in the method shown in FIG. 3.

This application further provides a computer program product including instructions. When the computer program product runs on a computer, the computer is enabled to perform the steps performed by the network device in the method shown in FIG. 3.

This application further provides a chip, including a processor. The processor is configured to read and run a computer program stored in a memory, to perform a corresponding operation and/or procedure performed by the terminal device in the downlink control information size alignment method provided in this application. Optionally, the chip further includes the memory. The memory is connected to the processor through a circuit or a cable. The processor is configured to read and execute the computer program in the memory. Further optionally, the chip further includes a communication interface, and the processor is connected to the communication interface. The communication interface is configured to receive data and/or information that needs to be processed. The processor obtains the data and/or the information from the communication interface, and processes the data and/or the information. The communication interface may be an input/output interface.

This application further provides a chip, including a processor. The processor is configured to read and run a computer program stored in a memory, to perform a corresponding operation and/or procedure performed by the network device in the downlink control information size alignment method provided in this application. Optionally, the chip further includes the memory. The memory is connected to the processor through a circuit or a cable. The processor is configured to read and execute the computer program in the memory. Further optionally, the chip further includes a communication interface, and the processor is connected to the communication interface. The communication interface is configured to receive data and/or information that needs to be processed. The processor obtains the data and/or the information from the communication interface, and processes the data and/or the information. The communication interface may be an input/output interface.

In this application, the terms "include", "have", and any variant thereof mean to cover the non-exclusive inclusion, for example, a process, method, system, product, or device that includes a series of steps or units is not necessarily limited to those steps or units that are clearly listed, but may include other steps or units not clearly listed or inherent to such a process, method, product, or device.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the functions for each particular application, but it should not be considered that the implementation goes beyond the scope of this application.

It may be clearly understood by a person skilled in the art that, for the purpose of convenient and brief description, for a detailed working process of the foregoing systems, apparatuses, and units, refer to a corresponding process in the foregoing method embodiment. Details are not described herein again.

In the several embodiments provided in this application, it should be understood that the disclosed system, apparatus, and method may be implemented in other manners. For example, the foregoing apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions in this application essentially, the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps in the methods in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

In addition, the term "and/or" in this application describes only an association relationship between associated objects, and represents that three relationships may exist. For example, A and/or B may represent the following three cases: Only A exists, both A and B exist, and only B exists. In addition, the character "/" in this specification generally indicates an "or" relationship between the associated objects. The term "at least one" in this application may represent "one" and "two or more". For example, at least one of A, B, and C may indicate the following seven cases: Only A exists, only B exists, only C exists, both A and B exist, both A and C exist, both C and B exist, and A, B, and C exist.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A downlink control information DCI size alignment method, comprising:
determining a payload size of a first DCI format, wherein the payload size of the first DCI format is the same as a payload size of a second DCI format; the first DCI format is for scheduling an uplink carrier, and carries a first carrier indication; the second DCI format is for scheduling a downlink carrier, and carries a second carrier indication; and the first carrier indication is different from the second carrier indication; and
monitoring DCI in the first DCI format.

2. The method according to claim 1, wherein the determining a payload size of a first DCI format comprises:
determining that the payload size of the first DCI format is an information bit quantity of a DCI format whose information bit quantity is largest in a plurality of DCI formats that need to be monitored by a terminal device.

3. The method according to claim 2, wherein the plurality of DCI formats further comprise a third DCI format; the third DCI format is for scheduling an uplink carrier, and carries the second carrier indication or a third carrier indication; and the third carrier indication is different from both the first carrier indication and the second carrier indication.

4. The method according to claim 2 or 3, wherein the plurality of DCI formats further comprise a fourth DCI format, wherein
the fourth DCI format is for scheduling a downlink carrier, and carries the first carrier indication; and an information bit quantity of the fourth DCI format is configured to be the same as an information bit quantity of the second DCI format; or
the fourth DCI format is for scheduling an uplink carrier, and carries the second carrier indication; and an information bit quantity of the fourth DCI format is configured to be the same as an information bit quantity of the first DCI format.

5. The method according to claim 1, wherein the first carrier indication indicates a carrier in a secondary cell, and the second carrier indication indicates a carrier in a primary cell; and
the determining a payload size of a first DCI format comprises:
determining that the payload size of the first DCI format is an information bit quantity of the second DCI format.

6. The method according to claim 1, wherein the first carrier indication indicates a carrier in a secondary cell, and the second carrier indication indicates a carrier in a primary cell or a secondary cell; and
the determining a payload size of a first DCI format comprises:
determining that the payload size of the first DCI format is an information bit quantity of a fifth DCI format, wherein the fifth DCI format is for scheduling a downlink carrier, and carries the first carrier indication; and the information bit quantity of the fifth DCI format is configured to be the same as an information bit quantity of the second DCI format.

7. The method according to any one of claims 1 to 6, wherein the monitoring DCI in the first DCI format comprises:
monitoring the DCI in the first DCI format in a first search space, wherein the first search space is a search space corresponding to the carrier indication carried in the second DCI format, or the first search space is a subset of a search space corresponding to the carrier indication carried in the first DCI format.

8. A downlink control information DCI size alignment method, comprising:
determining a payload size of a first DCI format, to enable the payload size of the first DCI format to be the same as a payload size of a second DCI format, wherein the first DCI format is for scheduling an uplink carrier, and carries a first carrier indication; the second DCI format is for scheduling a downlink carrier, and carries a second carrier indication; and the first carrier indication is different from the second carrier indication; and
sending DCI in a plurality of DCI formats.

9. The method according to claim 8, wherein the method further comprises:
configuring an information bit quantity of the first DCI format and an information bit quantity of the second DCI format; and
the determining a payload size of a first DCI format comprises:
when the information bit quantity of the first DCI format is less than the information bit quantity of the second DCI format, padding the first DCI format, to enable the payload size of the first DCI format to be the information bit quantity of the second DCI format.

10. The method according to claim 8, wherein the determining a payload size of a first DCI format comprises:
determining that the payload size of the first DCI format is an information bit quantity of a DCI format whose information bit quantity is largest in the plurality of DCI formats that need to be monitored by a terminal device.

11. The method according to claim 10, wherein the plurality of DCI formats further comprise a third DCI format; the third DCI format is for scheduling an uplink carrier, and carries the second carrier indication or a third carrier indication; and the third carrier indication is different from both the first carrier indication and the second carrier indication.

12. The method according to claim 10 or 11, wherein the plurality of DCI formats further comprise a fourth DCI format, wherein
the fourth DCI format is for scheduling a downlink carrier, and carries the first carrier indication; and an information bit quantity of the fourth DCI format is configured to be the same as an information bit quantity of the second DCI format; or
the fourth DCI format is for scheduling an uplink carrier, and carries the second carrier indication; and an information bit quantity of the fourth DCI format is configured to be the same as an information bit quantity of the first DCI format.

13. The method according to claim 8 or 9, wherein the method further comprises:
when the first carrier indication indicates a carrier in a secondary cell, and the second carrier indication indicates a carrier in a primary cell, padding or truncating the first DCI format, to enable the payload size of the first DCI format to be the information bit quantity of the second DCI format.

14. The method according to claim 8 or 9, wherein the first carrier indication indicates a carrier in a secondary cell, and the second carrier indication indicates a carrier in a primary cell or a secondary cell; and
the method further comprises:
configuring an information bit quantity of a fifth DCI format, wherein the fifth DCI format is for scheduling a downlink carrier, and carries the first carrier indication; and the information bit quantity of the fifth DCI format is the same as the information bit quantity of the second DCI format; and
padding or truncating the first DCI format, to enable the payload size of the first DCI format to be the information bit quantity of the fifth DCI format.

15. A downlink control information DCI size alignment apparatus, comprising:
a processing unit, wherein the processing unit is configured to determine a payload size of a first DCI format, wherein the payload size of the first DCI format is the same as a payload size of a second DCI format; the first DCI format is for scheduling an uplink carrier, and carries a first carrier indication; the second DCI format is for scheduling a downlink carrier, and carries a second carrier indication; and the first carrier indication is different from the second carrier indication; and
a transceiver unit, wherein the transceiver unit is configured to monitor DCI in the first DCI format.

16. The apparatus according to claim 15, wherein the processing unit is specifically configured to determine that the payload size of the first DCI format is an information bit quantity of a DCI format whose information bit quantity is largest in a plurality of DCI formats that need to be monitored by a terminal device.

17. The apparatus according to claim 16, wherein the plurality of DCI formats further comprise a third DCI format; the third DCI format is for scheduling an uplink carrier, and carries the second carrier indication or a third carrier indication; and the third carrier indication is different from both the first carrier indication and the second carrier indication.

18. The apparatus according to claim 16 or 17, wherein the plurality of DCI formats further comprise a fourth DCI format, wherein
the fourth DCI format is for scheduling a downlink carrier, and carries the first carrier indication; and an information bit quantity of the fourth DCI format is configured to be the same as an information bit quantity of the second DCI format; or
the fourth DCI format is for scheduling an uplink carrier, and carries the second carrier indication; and an information bit quantity of the fourth DCI format is configured to be the same as an information bit quantity of the first DCI format.

19. The apparatus according to claim 15, wherein the first carrier indication indicates a carrier in a secondary cell, and the second carrier indication indicates a carrier in a primary cell; and
the processing unit is specifically configured to determine that the payload size of the first DCI format is an information bit quantity of the second DCI format.

20. The apparatus according to claim 15, wherein the first carrier indication indicates a carrier in a secondary cell, and the second carrier indication indicates a carrier in a primary cell or a secondary cell; and
the processing unit is specifically configured to determine that the payload size of the first DCI format is an information bit quantity of a fifth DCI format, wherein the fifth DCI format is for scheduling a downlink carrier, and carries the first carrier indication; and the information bit quantity of the fifth DCI format is configured to be the same as an information bit quantity of the second DCI format.

21. The apparatus according to any one of claims 15 to 20, wherein the transceiver unit is specifically configured to monitor the DCI in the first DCI format in a first search space, wherein the first search space is a search space corresponding to the carrier indication carried in the second DCI format, or the first search space is a subset of a search space corresponding to the carrier indication carried in the first DCI format.

22. A downlink control information DCI size alignment apparatus, comprising:
a processing unit, wherein the processing unit is configured to determine a payload size of a first DCI format, to enable the payload size of the first DCI format to be the same as a payload size of a second DCI format, wherein the first DCI format is for scheduling an uplink carrier, and carries a first carrier indication; the second DCI format is for scheduling a downlink carrier, and carries a second carrier indication; and the first carrier indication is different from the second carrier indication; and
a transceiver unit, wherein the transceiver unit is configured to send DCI in a plurality of DCI formats.

23. The apparatus according to claim 22, wherein the processing unit is further configured to configure an information bit quantity of the first DCI format and an information bit quantity of the second DCI format; and
when the information bit quantity of the first DCI format is less than the information bit quantity of the second DCI format, the processing unit is specifically configured to pad the first DCI format, to enable the payload size of the first DCI format to be the information bit quantity of the second DCI format.

24. The apparatus according to claim 22, wherein the processing unit is specifically configured to determine that the payload size of the first DCI format is an information bit quantity of a DCI format whose information bit quantity is largest in the plurality of DCI formats that need to be monitored by a terminal device.

25. The apparatus according to claim 24, wherein the plurality of DCI formats further comprise a third DCI format; the third DCI format is for scheduling an uplink carrier, and carries the second carrier indication or a third carrier indication; and the third carrier indication is different from both the first carrier indication and the second carrier indication.

26. The apparatus according to claim 24 or 25, wherein the plurality of DCI formats further comprise a fourth DCI format, wherein
the fourth DCI format is for scheduling a downlink carrier, and carries the first carrier indication; and an information bit quantity of the fourth DCI format is configured to be the same as an information bit quantity of the second DCI format; or
the fourth DCI format is for scheduling an uplink carrier, and carries the second carrier indication; and an information bit quantity of the fourth DCI format is configured to be the same as an information bit quantity of the first DCI format.

27. The apparatus according to claim 22 or 23, wherein
when the first carrier indication indicates a carrier in a secondary cell, and the second carrier indication indicates a carrier in a primary cell, the processing unit is specifically configured to pad or truncate the first DCI format, to enable the payload size of the first DCI format to be the information bit quantity of the second DCI format.

28. The apparatus according to claim 22 or 23, wherein the first carrier indication indicates a carrier in a secondary cell, and the second carrier indication indicates a carrier in a primary cell or a secondary cell;
the processing unit is specifically configured to configure an information bit quantity of a fifth DCI format, wherein the fifth DCI format is for scheduling a downlink carrier, and carries the first carrier indication; and the information bit quantity of the fifth DCI format is the same as the information bit quantity of the second DCI format; and
the processing unit is further configured to pad or truncate the first DCI format, to enable the payload size of the first DCI format to be the information bit quantity of the fifth DCI format.

29. A communication apparatus, wherein the communication apparatus comprises a processor and a storage medium, and the storage medium stores instructions; and when the instructions are run by the processor, the communication apparatus is enabled to perform the method according to any one of claims 1 to 7, or perform the method according to any one of claims 8 to 14.

30. A computer-readable storage medium, wherein the computer-readable storage medium stores a computer program; and when the computer program is run, a communication apparatus is enabled to perform the method according to any one of claims 1 to 7, or perform the method according to any one of claims 8 to 14.

31. A computer program product, wherein the computer program product comprises a computer program; and when the computer program is run by a computer, the computer is enabled to perform the method according to any one of claims 1 to 7, or perform the method according to any one of claims 8 to 14.
